# EUROPÄISCHE PATENTSCHRIFT

(11) **EP 0 590 020 B1**
(45) Veröffentlichungstag und Bekanntmachung des Hinweises auf die Patenterteilung: **06.09.1995**
(21) Anmeldenummer: 92913250.4
(22) Anmeldetag: 19.06.1992
(51) Int. Cl.: C08L 83/06, C08L 83/08

(54) **HÄRTBARE ORGANO(POLY)SILOXANMASSEN**
CURABLE ORGANOPOLYSILOXANE PREPARATIONS
COMPOSITIONS DURCISSABLES D'ORGANO(POLY)SILOXANE

(30) Priorität: 20.06.1991 DE 4120418
(43) Veröffentlichungstag der Anmeldung: 06.04.1994
(73) Patentinhaber: WACKER-CHEMIE GMBH, D-81737 München (DE)
(72) Erfinder: STEPP, Michael, D-8263 Burghausen (DE); MÜLLER, Johann, D-8263 Burghausen (DE); BRENNENSTUHL, Werner, D-8269 Burgkirchen (DE)
(86) Internationale Anmeldenummer: EP9201385
(87) Internationale Veröffentlichungsnummer: WO9300405

(56) Entgegenhaltungen:
- EP-A- 0 153 700
- EP-A- 0 174 647
- US-A- 4 303 484

## Beschreibung

Die Erfindung betrifft Organo(poly)siloxanmassen, die sowohl bei Zutritt von Feuchtigkeit als auch durch Bestrahlung vernetzbar sind sowie deren Verwendung zur Herstellung von Überzügen.

Organo(poly)siloxanzusammensetzungen, die über zwei verschiedene Vernetzungsmechanismen aushärten, werden im allgemeinen als Dual-Systeme bezeichnet und sind bereits bekannt.

Ein Problem rein feuchtigkeitshärtender Organo(poly)siloxanzubereitungen ist, daß die Geschwindigkeit der Härtungsreaktion dieser Zubereitungen von der Wasserdiffusion durch die Oberfläche abhängt. Ab einer bestimmten Schichtdicke kann die Durchhärtung nicht mehr so schnell wie an der Oberfläche, z.B. innerhalb einiger Sekunden, ablaufen, so daß die härtbare Organo(poly)siloxanzubereitung dieses Typs nicht für Anwendungen brauchbar ist, bei denen die verklebenden oder abdichtenden Eigenschaften des Stoffes in kurzer Zeit erreicht werden müssen. Andererseits besitzen strahlenhärtbare Organo(poly)siloxanmischungen den Nachteil, daß sie zwar dort schnell aushärten, wo sie direkter Strahlung ausgesetzt sind, aber in Schattenbereichen die Härtung nur langsam fortschreitet.

Zur Vermeidung dieser Nachteile wurden daher Versuche unternommen, beide Vernetzungsarten zu kombinieren. Hierzu sei auf EP-A 182 941 (Loctite Corp.; ausgegeben am 4. Juni 1986), US 4,699,802 (Loctite Corp.; ausgegeben am 13. Oktober 1987), EP-A 315 342 (Dow Corning Corp.; ausgegeben am 10. Mai 1989) und EP-A 332 400 (Shin-Etsu Chemical Co., Ltd.; ausgegeben am 13. September 1989) verwiesen, in denen Organo(poly)siloxanmassen beschrieben werden, die neben acrylfunktionellen bzw. acrylamidfunktionellen Einheiten noch hydrolysierbare Gruppen, wie Alkoxyreste, aufweisen. Darüber hinaus sind in US 4,579,636 (Shin-Etsu Chemical Co., Ltd.,; ausgegeben am 1. April 1986) Massen beschrieben, die durch Mischen von hydroryterminiertem Organo(poly)siloxan mit Vinyltrialkoxysilan und mercaptofunktionellen Organo(poly)siloxanen erhalten werden und durch Strahlung wie auch durch Feuchtigkeit vernetzt werden können. Des weiteren werden in US 4,889,905 (Toray Silicone Co., Ltd.; ausgegeben am 26. Dezember 1989) durch Bestrahlung härtbare Massen beschrieben, die sich aus einem alkenylfunktionellen Organo(poly)siloxan, einem mercaptofunktionellen Organo(poly)siloxan und einer Organosiliciumverbindung, die sowohl Alkenylgruppen als auch Alkoxygruppen enthält, zusammensetzen.

Es bestand die Aufgabe, härtbare Organo(poly)siloxanmassen bereitzustellen.

Gegenstand der Erfindung sind Organo(poly)siloxanmassen, die
(A)Einheiten der Formel

   (R¹O)ₐSiHR²₂₋ₐO_{1/2} (I),

   worin
   R¹ und R² unabhängig voneinander jeweils gleich oder verschieden sein können und einen einwertigen, gegebenenfalls substituierten Kohlenwasserstoffrest bedeuten und a 1 oder 2 ist,
(B) durch Bestrahlung vernetzbare Siloxan-Einheiten der Formel (II) und/oder (III)
   sowie gegebenenfalls
(C) als Photoinitiator wirkende Siloxan-Einheiten der Formel (V)
   enthalten.

Bei R¹ und R² handelt es sich jeweils unabhängig voneinander bevorzugt um einen einwertigen, gegebenenfalls substituierten Kohlenwasserstoffrest mit 1 bis 13 Kohlenstoffatom(en).

Beispiele für Kohlenwasserstoffreste mit 1 bis 13 Kohlenstoffatom(en) sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest; Alkenylreste, wie der Vinyl- und der Allylrest; Cycloalkylreste, wie Cyclopentyl-, Cyclohexyl-, Cycloheptylreste und Methylcyclohexylreste; Arylreste, wie der Phenyl- und der Naphthylrest; Alkarylreste, wie o-, m-, p-Tolylreste, Xylylreste und Ethylphenylreste; Aralkylreste, wie der Benzylrest, der alpha- und der β-Phenylethylrest.

Beispiele für substituierte Kohlenwasserstoffreste sind Alkoxyalkylreste, wie der Methoxyethylrest, Halogenalkylreste, wie der Trifluorpropylrest und Acyloxyalkylreste, wie der Acetoxyethylrest.

Besonders bevorzugt handelt es sich bei R¹ um den Ethylrest.

Besonders bevorzugt handelt es sich bei R² um den Methylrest.

Bevorzugt ist a gleich 2.

Beispiele für Siloxan-Einheiten (A) der Formel (I) sind (EtO)₂SiHO_{1/2}, (MeO)₂SiHO_{1/2}, (EtO)SiHMeO_{1/2}, (MeO)SiHMeO_{1/2}, (n-PropO)₂SiHO_{1/2}, (n-BuO)(EtO)SiHO_{1/2} und (EtO)SiPhHO_{1/2} mit Me gleich Methylrest, Et gleich Ethylrest, Prop gleich Propylrest, Bu gleich Butylrest und Ph gleich Phenylrest.

Der Anteil an Siloxan-Einheiten (A) liegt vorzugsweise zwischen 0,1 und 66 %, besonders bevorzugt zwischen 0,5 und 30 %, insbesondere zwischen 0,5 und 5 %, jeweils bezogen auf die Gesamtzahl der in der erfindungsgemäßen Organosiloxanmasse vorhandenen Siloxan-Einheiten.

Bei den durch Bestrahlung vernetzbaren Siloxan-Einheiten (B) handelt es sich um Einheiten der Formel

GₕSiR³_{b}O_{(4-b-h)/2} (II)

und/oder

R⁵_{c}SiR⁴ᵢO_{(4-c-i)/2} (III),

worin
- G: gleich oder verschieden sein kann und einen einwertigen organischen Rest mit mindestens einer Thiolgruppe bedeutet,
- R³: gleich oder verschieden sein kann und eine für R² angegebene Bedeutung hat,
- b: 0, 1 oder 2, bevorzugt 1 oder 2, besonders bevorzugt 1, ist,
- h: 1, 2 oder 3, bevorzugt 1 oder 2, besonders bevorzugt 1, ist,
- R⁴: einen einwertigen, organischen Rest mit mindestens einer aliphatischen Kohlenstoff-Kohlenstoff-Mehrfachbindung bedeutet,
- R⁵: gleich oder verschieden sein kann und eine für R² angegebene Bedeutung hat,
- c: 0, 1 oder 2, bevorzugt 1 oder 2, besonders bevorzugt 1, ist und
- i: 1, 2 oder 3, bevorzugt 1 oder 2, besonders bevorzugt 1, ist,
mit der Maßgabe, daß die Summe aus b+h und die Summe aus c+i jeweils kleiner oder gleich 3 ist.

Beispiele für Rest G sind
-(CH₂)₃SH,
-(CH₂)₆SH,
-(CH₂)₄CH(SH)CH₃,
2-(3-Mercapto-1-cyclohexyl)-1-ethyl-,
2-(3,4-Dimercapto-1-cyclohexyl)-1-ethyl-,
-(CH₂)₃O(CH₂)₃SH,
-(CH₂)₃OCH₂CH(SH)CH₂SH,
-(CH₂)₃OCH₂CH(SH)CH₃,
-(CH₂)₃OOCCH₂SH,
-(CH₂)₃OOC(CH₂)₂SH,
-(CH₂)₈SH,
-(CH₂)₆CH(SH)CH₃,
-(CH₂)₇SH,
-CH₂SH,
-(CH₂)₂SH,
-(CH₂)₅CH=CH(CH₂)₅SH,
-(CH₂)₅CH=CH(CH₂)₃CH(SH)CH₃,
-(CH₂)₅CH(SH)(CH₂)₄CH=CH₂,
-(CH₂)₆CH(SH)(CH₂)₃CH=CH₂,
-(CH₂)₆CH(SH)(CH₂)₃CH(SH)CH₃,
-(CH₂)₅CH(SH)(CH₂)₄CH(SH)CH₃,
-(CH₂)₅CH(SH)(CH₂)₆SH,
-(CH₂)₆CH(SH)(CH₂)₆SH,
1-Mercapto-4-cyclododec-8-enyl-,
1-Mercapto-5-cyclododec-8-enyl-,
1,6-Dimercapto-10-cyclododecyl-,
1-Mercapto-2-cyclobutyl-,
1-Mercapto-3-cyclobutyl-,
1-Mercapto-2-cyclopentyl-,
1-Mercapto-3-cyclopentyl-,
1-Mercapto-2-cyclohexyl-,
1-Mercapto-3-cyclohexyl-,
1-Mercapto-4-cyclohexyl-,
1-Mercapto-2-cycloheptyl-,
1 Mercapto-3-cycloheptyl-,
1-Mercapto-4-cycloheptyl-,
1-Mercapto-2-cyclooctyl-,
1-Mercapto-3-cyclooctyl-,
1-Mercapto-4-cyclooctyl-,
1 Mercapto-5-cyclooctyl-,
1,2-Dimercapto-4-cyclohexyl-,
1-Mercaptocyclohex-3-en-3-yl-,
1-Mercaptocyclohex-3-en-4-yl-,
1-Mercaptocyclohex-2-en-4-yl-,
-(CH₂)₃SCH₂CH(SH)CH₂SH,
-(CH₂)₃S(CH₂)₃SH,
-ortho-(CH₂)₃OC₆H₄SH,
-metha-(CH₂)₃OC₆H₄SH,
-para-(CH₂)₃OC₆H₄SH,
-ortho-(CH₂)₃OC₆H₄O(CH₂)₃SH,
-meta-(CH₂)₃OC₆H₄O(CH₂)₃SH,
-para-(CH₂)₃OC₆H₄O(CH₂)₃SH,
-ortho-(CH₂)₃C₆H₄SH,
-meta-(CH₂)₃C₆H₄SH,
-para-(CH₂)₃C₆H₄SH,
-ortho-C₆H₄SH
-meta-C₆H₄SH,
-para-C₆H₄SH,
-(CH₂)OOC(CH₂)₁₁SH und
-(CH₂)₃OOC(CH₂)₉CH(SH)CH₃.

Bevorzugt handelt es sich bei Rest G um lineare oder cyclische Thioalkylreste mit 1 bis 13 Kohlenstoffatom(en), wobei lineare Thioalkylreste mit 3 bis 13 Kohlenstoffatomen, insbesondere -(CH₂)₃SH, -(CH₂)₆SH und -(CH₂)₄CH(SH)CH₃ besonders bevorzugt sind.

Bevorzugt handelt es sich bei Rest R³ um einwertige Kohlenwasserstoffreste mit 1 bis 13 Kohlenstoffatom(en), wobei der Methylrest besonders bevorzugt ist.

Beispiele für Einheiten der Formel (II) sind
H₃CSiO_{2/2}[-(CH₂)₃SH],
H₃CSiO_{2/2}[-(CH₂)₆SH],
H₃CSiO_{2/2}[-(CH₂)₄CH(SH)CH₃],
(H₃C)₂SiO_{1/2}[-(CH₂)₃SH],
SiO_{3/2}[-(CH₂)₃SH],
(H₃C)₂SiO_{1/2}[-(CH₂)₆SH],
SiO_{3/2}[-(CH₂)₆SH],
(H₃C)₂SiO_{2/2}[-(CH₂)₄CH(SH)CH₃],
SiO_{3/2}[-CH₂)₄CH(SH)CH₃],
H₃CSiO_{2/2}[2-(3-Mercapto-1-cyclohexyl)-1-ethyl-],
H₃CSiO_{2/2}[-2-(3,4-Dimercapto-1-cyclohexyl)-1-ethyl-],
H₃CSiO_{2/2}[-(CH₂)₃O(CH₂)₃SH],
H₃CSiO_{2/2}[-(CH₂)₃OOCCH₂SH],
H₃CSiO_{2/2}[-(CH₂)₃OOC(CH₂)₂SH],
H₃CSiO_{2/2}[-(CH₂(₃OOC(CH₂)₁₁SH],
SiO_{2/2}[-(CH₂₎₃SH]₂,
H₃CSiO_{2/2}[-(CH₂)₈SH],
(H₃C)₂SiO_{2/2}[-(CH₂)₈SH],
SiO_{3/2}[-(CH₂)₈SH],
H₃CSiO_{2/2}[-(CH₂)₅CH=CH(CH₂)₅SH],
(H₃C)₂SiO_{2/2}[-(CH₂)₅CH=CH(CH₂)₅SH],
SiO_{3/2}[-(CH₂)₅CH=CH(CH₂)₅SH],
H₃CSiO_{2/2}[-(CH₂)₆CH(SH)(CH₂)₃CH(SH)CH₃],
(H₃C)₂SiO_{2/2}[-(CH₂)₆CH(SH)(CH₂)₃CH(SH)CH₃],
SiO_{3/2}[-(CH₂)₆CH(SH)(CH₂)₃CH(SH)CH₃],
(H₃C)₂SiO_{2/2}[2-(3-Mercapto-1-cyclohexyl)-1-ethyl-],
SiO_{3/2}[2-(3-Mercapto-1-cyclohexyl)-1-ethyl-],
(H₃C)₂SiO_{2/2}[2-(3,4-Dimercapto-1-cyclohexyl)-1-ethyl-],
SiO_{3/2}[2-(3,4-Dimercapto-1-cyclohexyl)-1-ethyl-],
(H₃C)₂SiO_{2/2}[-(CH₂)₃O(CH₂)₃SH],
SiO_{3/2}[-(CH₂)₃O(CH₂)₃SH],
(H₃C)₂SiO_{2/2}[-(CH₂)₃OOCCH₂SH],
SiO_{3/2}[-(CH₂)₃OOCCH₂SH],
(H₃C)₂SiO_{1/2}[-CH₂)₃OOC(CH₂)₂SH],
SiO_{3/2}[-(CH₂)₃OOC(CH₂)₂SH],
(H₃C)₂SiO_{2/2}[-CH₂)₃OOC(CH₂)₁₁SH],
SiO_{3/2}[-(CH₂)₃OOC(CH₂)₁₁SH],
SiO_{2/2}[1-Mercaptocyclohex-3-en-3-yl-]₂,
SiO_{1/2}[-para-(CH₂)₃OC₆H₄SH]₃,
H₃CSiO_{2/2}[-meta-(CH₂)₃OC₆H₄O(CH₂)₃SH],
(H₃C)₂SiO_{1/2}[-para-(CH₂)₃C₆H₄SH] und
SiO_{3/2}[-(CH₂)₃OOC(CH₂)₉CH(SH)CH₃].

Bevorzugt handelt es sich bei den Einheiten der Formel (II) um
(H₃C)₂SiO_{2/2}[-(CH₂)₃SH],
SiO_{3/2}[-(CH₂)₃SH],
(H₃C)₂SiO_{1/2}[-(CH₂)₆SH],
SiO_{3/2}[-(CH₂)₆SH],
(H₃C)₂SiO_{2/2}[-(CH₂)₄CH(SH)CH₃],
SiO_{3/2}[-CH₂)₄CH(SH)CH₃],
H₃CSiO_{2/2}[2-(3-Mercapto-1-cyclohexyl)-1-ethyl-],
H₃CSiO_{2/2}[-2-(3,4-Dimercapto-1-cyclohexyl)-1-ethyl-],
H₃CSiO_{2/2}[-(CH₂)₃O(CH₂)₃SH],
H₃CSiO_{2/2}[-(CH₂)₃OOCCH₂SH],
H₃CSiO_{2/2}[-(CH₂)₃OOC(CH₂)₂SH],
H₃CSiO_{2/2}[-(CH₂)₃OOC(CH₂)₁₁SH],
H₃CSiO_{2/2}[-(CH₂)₃SH],
H₃CSiO_{2/2}[-(CH₂)₆SH] und
H₃CSiO_{2/2}[-(CH₂)₄CH(SH)CH₃],
wobei
H₃CSiO_{2/2}[-(CH₂)₃SH],
H₃CSiO_{2/2}[-(CH₂)₆SH] und
H₃CSiO_{2/2}[-(CH₂)₄CH(SH)CH₃] besonders bevorzugt sind.

Bei Rest R⁴ handelt es sich bevorzugt um mindestens eine aliphatische Kohlenstoff-Kohlenstoff-Mehrfachbindung aufweisende Reste mit 2 bis 18 Kohlenstoffatomen.

Beispiele für Reste R⁴ sind der Vinylrest, Allylrest, Propargylrest, Allenylrest, n-But-3-enylrest, n-Hex-5-enylrest, n-Undec-10-enylrest, 3-Allyloxyphenylrest, 4-Allyloxyphenylrest, 4-Allyloxy-2-methylphenylrest, 4-Allyl-oxybenzylrest, 4-Allyloxy-phenoxy-phenylrest und Prop-2-inoxy-n-propylrest, endozyclische Kohlenstoff-Kohlenstoff-Mehrfachbindung enthaltende Reste, wie beispielsweise 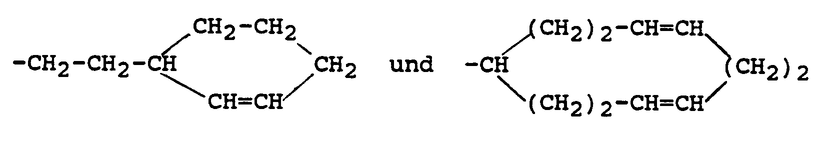
sowie Reste der Formel

YO(CO)ₒ(CH₂)ₚCR⁶=CH₂ (IV),

worin Y einen zweiwertigen organischen Rest bedeutet, R⁶ Wasserstoffatom oder einen Alkylrest mit 1 bis 6 Kohlenstoffatom(en) bedeutet, o gleich 0 oder 1 ist und p eine ganze Zahl zwischen 1 und 8 ist, wie beispielsweise
-(CH₂)₃OCH₂CH=CH₂,

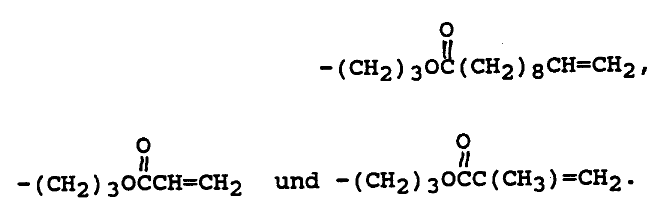

Beispiele für Rest Y sind Alkylenreste, wie der n-Propylen-, iso-Propylen-, 1-n-Butylen-, 2-n-Butylen-, iso-Butylen-, tert.-Butylen-, n-Pentylen-, iso-Pentylen-, neo-Pentylen-, tert.-Pentylenrest, Hexylenreste, wie der n-Hexylenrest, Heptylenreste, wie der n-Heptylenrest, Octylenreste, wie der n-Octylenrest, und iso-Octylenreste, wie der 2,2,4-Trimethylpentylenrest, Nonylenreste, wie der n-Nonylenrest und Decylenreste, wie der n-Decylenrest, sowie Cycloalkylenreste, wie Cyclopentylen-, Cyclohexylen-, Cycloheptylenreste und Methylcyclohexylenreste, Arylen-, Aralkylen- und Alkarylenreste, wie 1,4-Phenylen-, 1,3-Phenylen-, 4,4'-Biphenylen-, 3,3'-Biphenylen-, 3,4'-Biphenylen-, 1,4-Naphthalindiyl-, 1,5-Naphthalindiyl-, 1,4-Anthrachinondiyl-, 1,5-Anthrachinondiyl-, 2,6-Anthrachinondiyl-, Diphenylmethan-4,4'-diyl-, 2,2-Bisphenylpropan-4,4'-diyl-, 2,2-Bis-phenylperfluorpropan-4,4'-diyl-, 3,3-Bisphenylphthalid-4,4'-diyl- und Bisphenylsulfon-4,4'-diylreste, Cyanalkylenreste, wie der β-Cyanethylenrest, und halogenierte Kohlenwasserstoffreste, beispielsweise Halogenalkylenreste, wie der 2,2-Difluor-n-propylenrest, der 2,2,2,2',2',2'-Hexafluorisopropylenrest, und Halogenarylenreste, wie der o-, m-, und p-Chlorphenylenrest sowie gegebenenfalls substituierte m-oder p-Propyloxyphenylenreste, 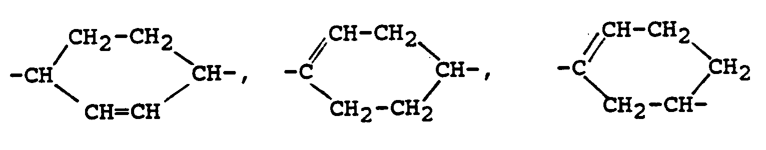
sowie -(CH₂)ₘ-X-(CH₂)ₙ- mit X gleich Schwefelatom, Sauerstoffatom, 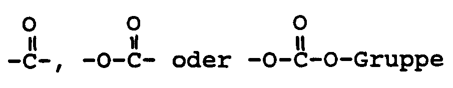
und m sowie n jeweils unabhängig voneinander gleich einer ganzen Zahl zwischen 1 und 13, wie beispielsweise -(CH₂)₃O(CH₂)₂- und

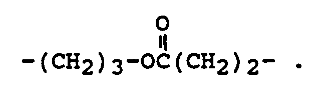

Bevorzugt handelt es sich bei Rest Y um einen linearen oder cyclischen Alkylrest, wobei lineare Alkylreste mit mindestens 3 Kohlenstoffatomen besonders bevorzugt sind.

Bei Rest R⁴ handelt es sich besonders bevorzugt um lineare oder cyclische Alkenylreste und Acryloxyalkylreste sowie Methacryloxyalkylreste jeweils mit 2 bis 12 Kohlenstoffatomen.

Insbesondere handelt es sich bei Rest R⁴ um den Vinylrest, sofern in den erfindungsgemäßen Massen Reste der Formel (II) vorhanden sind, und um den 3-Acryloxy-1-propylrest, wenn die erfindungsgemäßen Massen keine Reste der Formel (II) enthalten.

Bei Rest R⁵ handelt es sich bevorzugt um einen einwertigen Kohlenwasserstoffrest mit 1 bis 13 Kohlenstoffatom(en), wobei der Methylrest besonders bevorzugt ist.

Beispiele für Siloxan-Einheiten der Formel (III) sind
H₂C=CH-Si(CH₃)₂O_{1/2},
H₂C=CH-(CH₂)₄Si(CH₃)₂O_{1/2},
H₂C=CH-(CH₂)₄Si(CH₃)O_{2/2},
H₂C=CH-(CH₂)₄SiO_{3/2},
H₂C=CHCOO(CH₂)₃Si(CH₃)O_{2/2},
H₂C=C(CH₃)COO(CH₂)₃Si(CH₃)O_{2/2},
H₂C=CH-Si(CH₃)O_{2/2},
H₂C=CH-SiO_{3/2},
H₂C=CH-CH₂Si(CH₃)₂O_{1/2},
H₂C=CH-CH₂Si(CH₃)O_{2/2},
H₂C=CH-CH₂SiO_{3/2},
H₂C=CH-CH₂O(CH₂)₃Si(CH₃)O_{2/2},
(1-Cyclododeca-4,8-dienyl)Si(CH₃)O_{2/2},
〈2-(Bicyclo[2.2.1]hept-1-en-4-yl)-1-ethyl-〉Si(CH₃)O_{2/2},
〈2-(Cyclohex-1-en-4-yl)-1-ethyl-〉Si(CH₃)_{2/2},
H₂C=CH-(CH₂)₈COO(CH₂)₃Si(CH₃)O_{2/2},
H₂C=CHCOO(CH₂₎₃Si(CH₃)₂O_{1/2},
H₂C=C(CH₃)COO(CH₂)₃Si(CH₃)₂O_{1/2},
H₂C=CHCOO(CH₂)CH(OOCCH=CH₂)CH₂O(CH₂)₃Si(CH₃)O_{2/2},
H₂C=C(CH₃)COO(CH₂)CH(OOCC(CH₃)=CH₂)CH₂O(CH₂)₃Si(CH₃)O_{2/2},
(H₂C=CH-)₂Si(CH₃)O_{1/2},
(H₂C=CH-)₃SiO_{1/2},
(H₂C=CH-)₂SiO_{2/2},
H₂C=CH-(CH₂)₃Si(CH₃)₂O_{1/2},
H₂C=CH-(CH₂)₃Si(CH₃)O_{2/2},
H₂C=CH-(CH₂)₃SiO_{3/2},
H₂C=CH-(CH₂)₂Si(CH₃)₂O_{1/2},
H₂C=CH-(CH₂)₂Si(CH₃)O_{2/2},
H₂C=CH-(CH₂)₂SiO_{3/2},
H₂C=CH-Si(C₆H₅)O_{2/2},
H₂C=CH-CH₂Si(C₆H₅)O_{2/2},
H₂C=CH-CH₂O(CH₂)₃Si(CH₃)₂O_{1/2},
H₂C=CH-CH₂O(CH₂)₃SiO_{3/2},
H₂C=CH-CH₂OC₆H₄O(CH₂)₃Si(CH₃)₂O_{1/2},
H₂C=CH-CH₂OC₆H₄O(CH₂)₃Si(CH₃)O_{2/2},
H₂C=CH-CH₂OC₆H₄O(CH₂)₃SiO_{3/2},
H₂C=CH-CH₂OC₆H₄(CH₂)Si(CH₃)₂O_{1/2},
H₂C=CH-CH₂OC₆H₄(CH₂)Si(CH₃)O_{2/2},
H₂C=CH-CH₂OC₆H₄(CH₂)SiO_{3/2},
H₂C=CH-C₆H₄(CH₂)₂Si(CH₃)₂O_{1/2},
H₂C=CH-C₆H₄(CH₂)₂Si(CH₃)O_{2/2},
H₂C=CH-C₆H₄(CH₂)₂SiO_{3/2},
H₂C=CH-(CH₂)₃HC=CH(CH₂)₅Si(CH₃)₂O_{1/2},
H₂C=CH-(CH₂)₃HC=CH(CH₂)₅Si(CH₃)O_{2/2},
H₂C=CH-(CH₂)₃HC=CH(CH₂)₅SiO_{3/2},
HC≡C-CH₂-O-CH₂-CH=CH₂Si(CH₃)O_{2/2},
HC≡C-CH₂-O-CH₂-CH=CH₂Si(CH₃)₂O_{1/2},
HC≡C-CH₂-O-CH₂-CH=CH₂SiO_{3/2},
HC≡C-CH₂Si(CH₃)O_{2/2},
HC≡C-CH₂Si(CH₃)₂O_{1/2},
HC≡C-CH₂SiO_{3/2},
(HC≡C-CH₂)₂SiO_{2/2},
HC=C=CH-Si(CH₃)O_{2/2},
HC=C=CH-Si(CH₃)₂O_{1/2},
HC=C=CH-SiO_{3/2},
HC≡C-CH₂-O-(CH₂)₃Si(CH₃)O_{2/2},
HC≡C-CH₂-O-(CH₂)₃Si(CH₃)₂O_{1/2},
HC≡C-CH₂-O-(CH₂)₃SiO_{3/2},
H₃COOCC≡C-(CH₂)₄-Si(CH₃)O_{2/2},
(1-Cyclododeca-4,8-dienyl)Si(CH₃)₂O_{1/2},
(1-Cyclododeca-4,8-dienyl)SiO_{3/2},
〈2-(Bicyclo[2.2.1]hept-1-en-4-yl)-1-ethyl-〉Si(CH₃)₂O_{1/2},
〈2-(Bicyclo[2.2.1]hept-1-en-4-yl)-1-ethyl-〉SiO_{3/2},
〈2-(Cyclohex-1-en-4-yl)-1-ethyl-〉Si(CH₃)₂O_{1/2},
〈2-(Cyclohex-1-en-4-yl)-1-ethyl-〉SiO_{3/2},
H₂C=CH-(CH₂)₈COO(CH₂)₃Si(CH₃)₂O_{1/2},
H₂C=CH-(CH₂)₈COO(CH₂)₃SiO_{3/2},
H₂C=CHCOO(CH₂)₃SiO_{3/2},
H₂C=CHCOO(CH₂)₆Si(CH₃)O_{2/2},
H₂C=CHCOO(CH₂)₆Si(CH₃)₂O_{1/2},
H₂C=CHCOO(CH₂)₆SiO_{3/2},
H₂C=CHCOO(CH₂)₃C₆H₄(CH₂)₃Si(CH₃)O_{2/2},
H₂C=CHCOO(CH₂)₃C₆H₄(CH₂)₃Si(CH₃)₂O_{1/2},
H₂C=CHCOO(CH₂)₃C₆H₄(CH₂)₃SiO_{3/2},
H₂C=C(CH₃)COO(CH₂)₃SiO_{3/2},
H₂C=C(CH₃)COO(CH₂)₃C₆H₄(CH₂)₃Si(CH₃)O_{2/2},
H₂C=C(CH₃)COO(CH₂)₃C₆H₄(CH₂)₃Si(CH₃)₂O_{1/2},
H₂C=C(CH₃)COO(CH₂)₃C₆H₄(CH₂)₃SiO_{3/2},
H₂C=CHCOO(CH₂)CH(OOCCH=CH₂)CH₂O(CH₂)₃Si(CH₃)₂O_{1/2},
H₂C=CHCOO(CH₂)CH(OOCCH=CH₂)CH₂O(CH₂)₃SiO_{3/2},
H₂C=C(CH₃)COO(CH₂)CH(OOCC(CH₃)=CH₂)CH₂O(CH₂)₃Si(CH₃)₂O_{1/2},
H₂C=C(CH₃)COO(CH₂)CH(OOCC(CH₃)=CH₂)CH₂O(CH₂)₃SiO_{3/2},
H₂C=CHCOO(CH₂CH₂O)₃C₆H₄(CH₂)₃Si(CH₃)O_{2/2},
H₂C=CHCOO(CH₂CH₂O)₃C₆H₄(CH₂)₃Si(CH₃)₂O_{1/2},
H₂C=CHCOO(CH₂CH₂O)₃C₆H₄(CH₂)₃SiO_{3/2},
H₂C=CHCOO(CH₂)₆OOC(CH₂)₂Si(CH₃)O_{2/2},
H₂C=CHCOO(CH₂)₆OOC(CH₂)₂Si(CH₃)₂O_{1/2},
H₂C=CHCOO(CH₂)₆OOC(CH₂)₂SiO_{3/2},
H₂C=CHCOO(CH₂CH₂O)₃(CH₂)₃Si(CH₃)O_{2/2},
H₂C=CHCOO(CH₂CH₂O)₃(CH₂)₃Si(CH₃)₂O_{1/2},
H₂C=CHCOO(CH₂CH₂O)₃(CH₂)₃SiO_{3/2},
H₂C=CHCOO(CH₂CH₂O)₄OC(CH₂)₂Si(CH₃)O_{2/2},
H₂C=CHCOO(CH₂CH₂O)₄OC(CH₂)₂Si(CH₃)₂O_{1/2},
H₂C=CHCOO(CH₂CH₂O)₄OC(CH₂)₂SiO_{3/2},
〈H₂C=C(CH₃)COO(CH₂)₃〉₂SiO_{2/2} und
〈H₂C=C(CH₃)COO(CH₂)₃〉₃SiO_{1/2}.

Bevorzugt handelt es sich bei den Einheiten der Formel (III) um
H₂C=CH-Si(CH₃)O_{2/2},
H₂C=CH-SiO_{3/2},
H₂C=CH-CH₂Si(CH₃)₂O_{1/2},
H₂C=CH-CH₂Si(CH₃)O_{2/2},
H₂C=CH-CH₂SiO_{3/2},
H₂C=CH-CH₂O(CH₂)₃Si(CH₃)O_{2/2},
(1-Cyclododeca-4,8-dienyl)Si(CH₃)O_{2/2},
〈2-(Bicyclo[2.2.1]hept-1-en-4-yl)-1-ethyl-〉Si(CH₃)O_{2/2},
〈2-(Cyclohex-1-en-4-yl)-1-ethyl-〉Si(CH₃)O_{2/2},
H₂C=CH-(CH₂)₈COO(CH₂)₃Si(CH₃)O_{2/2},
H₂C=CHCOO(CH₂)₃Si(CH₃)₂O_{1/2},
H₂C=C(CH₃)COO(CH₂)₃Si(CH₃)₂O_{1/2},
H₂C=CHCOO(CH₂)CH(OOCCH=CH₂)CH₂O(CH₂)₃Si(CH₃)O_{2/2},
H₂C=C(CH₃)COO(CH₂)CH(OOCC(CH₃)=CH₂)CH₂O(CH₂)₃Si(CH₃)O_{2/2},
H₂C=CH-Si(CH₃)₂O_{1/2},
H₂C=CH-(CH₂)₄Si(CH₃)₂O_{1/2},
H₂C=CH-(CH₂)₄Si(CH₃)O_{2/2},
H₂C=CH-(CH₂)₄SiO_{3/2},
H₂C=CHCOO(CH₂)₃Si(CH₃)O_{2/2} und
H₂C=C(CH₃)COO(CH₂)₃Si(CH₃)O_{2/2},
wobei
H₂C=CH-Si(CH₃)O_{2/2},
H₂C=CH-Si(CH₃)₂O_{1/2},
H₂C=CH-(CH₂)₄Si(CH₃)₂O_{1/2},
H₂C=CH-(CH₂)₄Si(CH₃)O_{2/2},
H₂C=CH-(CH₂)₄SiO_{3/2},
H₂C=CHCOO(CH₂)₃Si(CH₃)O_{2/2} und
H₂C=C(CH₃)COO(CH₂)₃Si(CH₃)O_{2/2} besonders bevorzugt sind.

Bevorzugt weisen die erfindungsgemäßen Organo(poly)siloxanmassen als durch Strahlung härtbare Siloxan-Einheiten (B) sowohl Einheiten der Formel (II) als auch Einheiten der Formel (III) auf. Das Verhältnis der Anzahl der Einheiten der Formel (II) zu Einheiten der Formel (III) liegt dabei vorzugsweise im Bereich zwischen 0,1 und 10, besonders bevorzugt zwischen 0,3 und 1, insbesondere bei 0,5. Hat R⁴ in Formel (III) ausschließlich die Bedeutung von acrylfunktionellem Rest und/oder methacrylfunktionellem Rest, kann in der erfindungsgemäßen Organo(poly)siloxanmasse auf Siloxan-Einheiten der Formel (II) verzichtet werden.

Der Anteil an Siloxan-Einheiten (B) liegt vorzugsweise zwischen 0,1 und 66 %, besonders bevorzugt zwischen 0,5 und 30 %, insbesondere zwischen 0,5 und 5 %, jeweils bezogen auf die Gesamtzahl der in der erfindungsgemäßen Organo(poly)siloxanmasse vorhandenen Siloxan-Einheiten.

Bei den als Photoinitiator wirkenden Siloxan-Einheiten (C) handelt es sich um solche der Formel

(R⁷O)_{d}R⁸ₑHZ_{g}SiO_{(3-d-e-g)/2} (V),

wobei
- R⁷: gleich oder verschieden sein kann und eine für R¹ angegebene Bedeutung hat,
- R⁸: gleich oder verschieden sein kann und eine für R² angegebene Bedeutung hat,
- Z: gleich oder verschieden sein kann und eine durch Bestrahlung Radikale bildende Gruppe bedeutet,
- d: 0 oder 1, bevorzugt 1, ist,
- e: 0 oder 1, bevorzugt 0, ist und
- g: 1 oder 2, bevorzugt 1, ist,
mit der Maßgabe, daß in Formel (V) die Summe aus d, e und g kleiner oder gleich 2 ist.

Beispiele für Rest Z sind
2-Methyl-1-phenyl-1-propanon-2-oxy,
(1-Oxycyclohexyl)phenylketon,
1-(4-Methoxyphenyl)-2-methyl-1-propanon-2-oxy-,
(1-Oxy-2-cyclohexen-1-yl)phenylketon,
3-Methoxy-2-methyl-1-phenyl-1-propanon-2-oxy-,
2-Ethyl-1-phenyl-1-hexanon-2-oxy,
2-Methyl-1-(4-tolyl)-1-propanon-2-oxy-,
1-(4-Ethylphenyl)-2-methyl-1-propanon-2-oxy-,
1-(4-Cumyl)-2-methyl-1-propanon-2-oxy-,
1-(4-tert.Butylphenyl)-2-methyl-1-propanon-2-oxy-,
1-(4-Dodecylphenyl)-2-methyl-1-propanon-2-oxy-,
2-Ethyl-1-(4-tolyl)-1-hexanon-2-oxy-,
1-(4-tert.Butylphenyl)-2-ethyl-1-hexanon-2-oxy-,
1-(3,4-Dimethylphenyl)-2-methyl-1-propanon-2-oxy-,
1-(2,4-Dimethylphenyl)-2-methyl-1-propanon-2-oxy-,
1-(2,5-Dimethylphenyl)-2-methyl-1-propanon-2-oxy-,
1-(3-Chlor-4-methylphenyl)-2-methyl-1-propanon-2-oxy-,
1-(3-Chlorphenyl)-2-methyl-1-propanon-2-oxy-,
1-(4-Fluorphenyl)-2-methyl-1-propanon-2-oxy-,
2-Ethyl-1-(4-fluorphenyl)-1-hexanon-2-oxy-,
2-Ethyl-1-(4-methoxyphenyl)-1-hexanon-2-oxy-,
2-Methyl-1-(4-phenoxyphenyl)-1-propanon-2-oxy-,
2-Methyl-1-(4-phenylthiophenyl)-1-propanon-2-oxy-,
2-Methyl-1-phenyl-1-butanon-2-oxy-,
2-Ethyl-1-phenyl-1-butanon-2-oxy-,
(2,4-Dimethylphenyl)-(1-oxycyclohexyl)keton,
(1-Oxycyclopentyl)phenylketon,
(1-Oxycyclobutyl)phenylketon,
(1-Oxy-3,4-dimethyl-3-cyclohexen-1-yl)phenylketon,
(1-Oxy-4-methyl-3-cyclohexen-1-yl)phenylketon,
(1-Oxy-3-cyclohexen-1-yl)phenylketon,
3-Benzyloxy-2-methyl-1-phenyl-1-propanon-2-oxy-,
2-Methyl-3-morpholino-1-phenyl-1-propanon-2-oxy- und
4-Methyl-5-phenyl-5-oxo-pentansäuremethylester-4-oxy-.

Vorzugsweise handelt es sich bei Rest Z um eine über Sauerstoff an das Siliciumatom gebundene, durch Bestrahlung Radikale bildende Gruppe, wobei
1-(4-Methoxyphenyl)-2-methyl-1-propanon-2-oxy-,
(1-Oxy-2-cyclohexen-1-yl)phenylketon,
3-Methoxy-2-methyl-1-phenyl-1-propanon-2-oxy-,
2-Methyl-1-phenyl-1-propanon-2-oxy und
(1-Oxycyclohexyl)phenylketon besonders bevorzugt sind, insbesondere 2-Methyl-1-phenyl-1-propanon-2-oxy und (1-Oxycyclohexyl)phenylketon.

Bevorzugt handelt es sich bei Rest R⁷ um einen linearen Alkylrest mit 1 bis 13 Kohlenstoffatom(en), wobei der Ethylrest besonders bevorzugt ist.

Bevorzugt handelt es sich bei Rest R⁸ um einen linearen Alkylrest mit 1 bis 13 Kohlenstoffatom(en), wobei der Methylrest besonders bevorzugt ist.

Beispiele für Siloxan-Einheiten (C) sind
SiH(OEt)(O-C(CH₃)₂-COPh)O_{1/2}, SiH(CH₃)(O-C(CH₃)₂-COPh)O_{1/2},
SiH(O-C(CH₃)₂-COPh)O_{2/2}, SiH(O-C(CH₃)₂-COPh)₂O_{1/2},
SiH(OCH₃)(O-C(CH₃)₂-COPh)O_{1/2}, SiH(OOC-CO-Ph)₂O_{1/2},
SiH(CH₃) 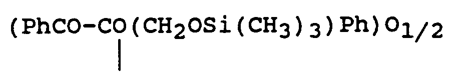
und
SiH(OC₃H₇)(meta-O-C₆H₄(CO)₂Ph)O_{1/2} mit Ph gleich Phenyl- und Et gleich Ethylrest.

Bevorzugt als Siloxan-Einheiten (C) sind
SiH(OEt)(O-C(CH₃)₂-COPh)O_{1/2}, SiH(CH₃)(O-C(CH₃)₂-COPh)O_{1/2},
SiH(O-C(CH₃)₂-COPh)O_{2/2}, SiH(O-C(CH₃)₂-COPh)₂O_{1/2}, wobei
SiH(OEt)(O-C(CH₃)₂-COPh)O_{1/2}, SiH(CH₃)(O-C(CH₃)₂-COPh)O_{1/2}
besonders bevorzugt sind und Ph gleich Phenyl- und Et gleich Ethylrest bedeutet.

Falls in den erfindungsgemäßen Organo(poly)siloxanmassen Siloxan-Einheiten (C) vorhanden sind, liegt deren Anteil vorzugsweise zwischen 1 und 100 %, besonders bevorzugt zwischen 5 und 50 %, jeweils bezogen auf die Gesamtzahl der in der erfindungsgemäßen Organosiloxanmasse vorhandenen Siloxan-Einheiten (B).

Vorzugsweise beträgt das Verhältnis der Anzahl von Siloxan-Einheiten (A) zu Siloxan-Einheiten (B) 20:1 bis 1:100, besonders bevorzugt 2:1 bis 1:50.

Die erfindungsgemäßen Organopolysiloxanmassen können des weiteren Einheiten der allgemeinen Formel

RₖSiO_{(4-k)/2} (VI),

enthalten, worin
- R: gleich oder verschieden sein kann und eine der für R² angegebenen Bedeutungen hat und
- k: 0, 1, 2 oder 3, bevorzugt 2, ist.

Bei Rest R handelt es sich bevorzugt um Kohlenwasserstoffreste mit 1 bis 13 Kohlenstoffatom(en), wobei der Methylrest besonders bevorzugt ist.

Bei den Siloxan-Einheiten der Formel (VI) handelt es sich besonders bevorzugt um Dialkylsiloxygruppen, insbesondere um Dimethylsiloxygruppen.

Der Anteil an Siloxan-Einheiten der Formel (VI) liegt vorzugsweise zwischen 1 und 99,9 %, besonders bevorzugt zwischen 60 und 99 %, jeweils bezogen auf die Gesamtzahl der in der erfindungsgemäßen Organosiloxanmasse vorhandenen Siloxan-Einheiten. In untergeordnetem Maße können die erfindungsgemäßen Organo(poly)siloxanmassen jedoch auch - zum Teil herstellungsbedingt - andere Siloxan-Einheiten, wie beispielsweise Hydroxylgruppen aufweisende Siloxan-Einheiten, HSiO_{3/2}-, HSiR²O_{2/2}-, R²Si(OR¹)O_{2/2}- und/oder HSi(OR¹)O_{2/2}-Einheiten aufweisen, wobei R¹ und R² jeweils eine der oben dafür angegebenen Bedeutungen haben.

Die erfindungsgemäßen Massen können eine Art von Organo(poly)siloxan oder ein Gemisch aus mehreren Arten von Organo(poly)siloxanen enthalten. Dabei können die Siloxan-Einheiten (A), (B) und gegebenenfalls (C) ein und demselben Organo(poly)siloxanmolekül angehören. Es kann sich aber auch jede der Siloxan-Einheiten (A), (B) und gegebenenfalls (C) getrennt an unterschiedlichen Organo(poly)siloxanmolekülen befinden.

Beispielsweise können die erfindungsgemäßen Organo(poly)siloxanmassen Organo(poly)siloxane enthalten, die sowohl Siloxan-Einheiten (A) als auch Siloxan-Einheiten (B) enthalten, wie beispielsweise die in der internationalen Anmeldung mit dem Aktenzeichen PCT/EP91/00795 (Wacker-Chemie GmbH, angemeldet am 25. April 1991) und in der deutschen Anmeldung mit dem Aktenzeichen P4114554.7 (Wacker-Chemie GmbH, angemeldet am 25. April 1991) beschriebenen Organo(poly)siloxane mit einer aliphatischen Kohlenstoff-Kohlenstoff-Mehrfachbindung.

Ein weiterer Gegenstand der vorliegenden Erfindung sind daher Organo(poly)siloxane, die
(A) Einheiten der Formel (I)
   und
(B) durch Bestrahlung vernetzbare Siloxan-Einheiten enthalten.

Bei den in Formel (I) der internationalen Anmeldung mit dem Aktenzeichen PCT/EP91/00795 (Wacker-Chemie GmbH, angemeldet am 25. April 1991) beschriebenen Organo(poly)siloxanen handelt es sich um solche der Formel 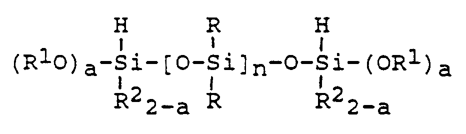
worin
R, R¹ und R² unabhängig voneinander jeweils gleich oder verschieden sein können und einen einwertigen, gegebenenfalls substituierten Kohlenwasserstoffrest, bevorzugt einen einwertigen, gegebenenfalls substituierten Kohlenwasserstoffrest mit 1 bis 13 Kohlenstoffatomen, bedeutet,
- n: eine ganze Zahl von mindestens 2, bevorzugt zwischen 10 und 2500, besonders bevorzugt zwischen 10 und 1000, insbesondere zwischen 20 und 500, und
- a: 1 oder 2, bevorzugt 2 ist.

Bei den in Formel (I) der deutschen Anmeldung mit dem Aktenzeichen P4114554.7 (Wacker-Chemie GmbH, angemeldet am 25. April 1991) beschriebenen Organopolysiloxanen handelt es sich um solche der Formel

(R¹O)ₐHSiR₂₋ₐO[SiR₂O]ₙSiR₂R²

worin R und R² jeweils gleich oder verschieden sind, einen einwertigen, gegebenenfalls substituierten Kohlenwasserstoffrest bedeuten,
R¹ gleich oder verschieden ist, einen einwertigen, gegebenenfalls substituierten Kohlenwasserstoffrest bedeutet,
n eine ganze Zahl von mindestens 2 und
a 1 oder 2 ist.

Vorzugsweise handelt es sich bei den erfindungsgemäßen, Siloxan-Einheiten (A) und (B) aufweisenden Organo(poly)siloxanen um solche, die Einheiten der Formel (I), (II) und/oder (III) sowie (SiR₂O)-Einheiten mit R gleich der obengenannten Bedeutung aufweisen.

Besonders bevorzugt handelt es sich bei den erfindungsgemäßen, Siloxan-Einheiten (A) und (B) aufweisenden Organo(poly)siloxanen um solche, bestehend aus 0,5 bis 10 % Siloxan-Einheiten der Formel (I), 0,5 bis 20 % der Siloxan-Einheiten der Formel (II) und/oder (III) sowie 70 bis 99 % (SiR₂O)-Einheiten mit R gleich der obengenannten Bedeutung, bezogen auf die Gesamtanzahl der Siloxan-Einheiten im Molekül.

Beispiele für derartige Organo(poly)siloxane sind
[HSi(OEt)₂O_{1/2}]₂[SiMe₂O_{2/2}]₆₅[SiVinylMeO_{2/2}]₄[Si((CH₂)₃SH)MeO_{2/2}]₂,
[HSi(OEt)₂O_{1/2}]₂[SiMe₂O_{2/2}]₁₃₅[SiVinylMeO_{2/2}]₄[Si((CH₂)₃SH)MeO_{2/2}]₂,
[HSi(OEt)₂O_{1/2}]₂[SiMe₂O_{2/2}]₃₃₄[SiVinylMeO_{2/2}]₈[Si((CH₂)₃SH)MeO_{2/2}]₇,
[HSi(OEt)₂O_{1/2}]₂[SiMe₂O_{2/2}]₂₅₈[SiVinylMeO_{2/2}]₆[Si((CH₂)₃SH)MeO_{2/2}]₄,
[HSi(OEt)MeO_{1/2}]₂[SiMe₂O_{2/2}]₆₅[SiVinylMeO_{2/2}][Si((CH₂)₃SH)MeO_{2/2}]₂,
[HSi(OEt)₂O_{1/2}]₂[SiMe₂O_{2/2}]₆₄[SiMeCH₂CH=CH₂O_{2/2}]₇[SiMe(CH₂)₃OOC(CH₂)₂SHO_{2/2}]₃,
[HSi(OEt)₂O_{1/2}]₂[SiMe₂O_{2/2}]₅₄₅[SiVinylMeO_{2/2}]₆₇[Si((CH₂)₃SH)MeO_{2/2}]₃₃,
[HSi(OEt)₂O_{1/2}]₃[SiMe₂O_{2/2}]₂₅₈[SiVinylMeO_{2/2}]₆[Si((CH₂)₃SH)MeO_{2/2}]₄[SiMeO_{3/2}]₁,
[HSi(OMe)₂O_{1/2}]₂[SiMe₂O_{2/2}]₆₅[SiVinylMeO_{2/2}][Si((CH₂)₃SH)MeO_{2/2}]₂,
[HSi(OEt)MeO_{1/2}]₂[SiMe₂O_{2/2}]₁₃₄[Si(CH₂)₄CH=CH₂MeO_{2/2}]₄[Si((CH₂)₆SH)MeO_{2/2}]₂,
[HSi(OEt)MeO_{1/2}]₂[SiMe₂O_{2/2}]₁₂₀[SiMePhO_{2/2}]₂₄[Si(CH₂)₄CH=CH₂MeO_{2/2}]₄[Si((CH₂)₆SH)MeO_{2/2}]₂,
[HSi(OEt)₂O_{1/2}]₂[SiMe₂O_{2/2}]₁₂₀[SiMe(CH₂)₂CF₃O_{2/2}]₁₅[Si(CH₂)₃OC₆H₄OCH₂CH=CH₂MeO_{2/2}]₄[Si((CH₂)₆SH)MeO_{2/2}]₂,
[HSi(OMe)MeO_{1/2}]₂[SiMe(CH₂)₃OCH₂CH(SH)CH₂SHO_{2/2}]₁₁₋ [SiMeVinylO_{2/2}]₅₅[SiMe₂O_{2/2}]₆₇,
[HSi(OEt)₂O_{1/2}]₂[SiMe₂O_{2/2}]₁₇₂[SiMe(CH₂)₃O(CH₂)₃SHO_{2/2}]₄[SiMeO(CDD)O_{2/2}]₁₁
(CDD: 1-Cyclododeca-4,8-dienylrest),
[HSi(OEt)₂O_{1/2}]₂[SiMe₂O_{2/2}]₇₆[SiMe(CH₂)₃SHO_{2/2}]₄[SiMeO(ECH)O_{2/2}]₁₁
(ECH: 2-(Cyclohex-3-en-1-yl)-ethylrest),
[HSi(OEt)₂O_{1/2}]₂[SiMe₂O_{2/2}]₁₂₁[Si(CH₂)₃OOCCH=CH₂MeO_{2/2}]₁ [SiVinylMeO_{2/2}]₄[Si((CH₂)₃SH)MeO_{2/2}]₂,
[HSi(OEt)(OBu)O_{1/2}][HSi(OEt)₂O_{1/2}][SiMe₂O_{2/2}]₂₂₀[SiMePhO_{2/2}]₄₄[SiCH₂CH=CH₂MeO_{2/2}]₄[Si((CH₂)₆SH)MeO_{2/2}]₂,
[HSi(OⁱPr)₂O_{1/2}]₄[SiMeC₂H₄CF₃O_{2/2}]₁₄₄[Si(CH₂)₃OOCCH=CH₂O_{3/2}]₂,
[HSi(OEt)₂O_{1/2}]₄[SiMe₂O_{2/2}]₅₄[SiMeCH₂CH=CH₂O_{2/2}]₁₇[SiMe(CH₂)₃O(CH₂)₃SHO_{2/2}]₃[SiO_{4/2}],
[HSi(OEt)₂O_{1/2}]₂[SiMe₂O_{2/2}]₆₄[SiMe(-para-C₆H₅)SHO_{2/2}][SiMeC≡CHO_{2/2}]₂,
[HSi(OEt)₂O_{1/2}]₂[SiMe₂O_{2/2}]₁₂₀[SiMe(CH₂)₂CF₃O_{2/2}]₁₅[Si(CH₂)₃OC₆H₄OCH₂CH=CH₂MeO_{2/2}]₄[Si((CH₂)₆SH)MeO_{2/2}]₂,
[HSi(OⁿBu)₂O_{1/2}]₂[SiMe₂O_{2/2}]₃₄₄[SiMe(CH₂)₄CH=CH₂O_{2/2}]₃[SiMe(CH₂)₃OCH₂CH=CH₂O_{2/2}]₂[SiMe(CH₂)₃SHO_{2/2}]₈,
[HSi(OEt)₂O_{1/2}]₂[SiMe₂O_{2/2}]₇₂[SiMe(CH₂)₃OOCCH₂SHO_{2/2}]₄₋ [SiMe(CH₂)₆OOCC(CH₃)=CH₂O_{2/2}]₁[SiMeVinylO_{2/2}]₅,
[HSi(OEt)₂O_{1/2}]₂[SiMe₂O_{2/2}]₁₇₂[SiMe(CH₂)₃O(CH₂)₃SHO_{2/2}]₄₋ [SiMe(CH₂)₃OOCCH=CH₂O_{2/2}]₁₁,
[HSi(OEt)PhO_{1/2}]₂[SiMe₂O_{2/2}]₁₂₂[SiMe(CH₂)₃SHO_{2/2}]₂[SiMe(CH₂)₅CH=CH(CH₂)₃CH=CH₂O_{2/2}]₂,
[HSi(OEt)₂O_{1/2}]₂[SiMe₂O_{2/2}]₁₇₈[SiMe(CH₂)₃OOCCH=CH₂O_{2/2}]₁₁,
[HSi(OⁿC₆H₁₃)₂O_{1/2}]₂[SiMe₂O_{2/2}]₆₈[SiMe(CH₂)₃OOCCH=CH₂O_{2/2}]₉,
[HSi(OC₂H₄OC₂H₄OCH₃)₂O_{1/2}]₂[SiMe₂O_{2/2}]₂₇₁[SiMe(CH₂)₃SHO_{2/2}]₁₅[SiMe(CH₂)₃CH=CH₂O_{2/2}]₃₁,
[HSi(OC₂H₄OCH₂CH=CH₂)₂O_{1/2}]₂[SiMe₂O_{2/2}]₇₅[SiMe(CH₂)₅CH=CH(CH₂)₅SHO_{2/2}]₄[SiMeVinylO_{2/2}]₈ und
[HSi(OCH₂COOMe)₂O_{1/2}]₂[SiMe₂O_{2/2}]₁₇₅[SiMe(CH₂)₅CH(SH)(CH₂)₆SHO_{2/2}]₅[SiMeVinylO_{2/2}]₈,
wobei
[HSi(OEt)₂O_{1/2}]₂[SiMe₂O_{2/2}]₆₅[SiVinylMeO_{2/2}]₄[Si((CH₂)₃SH)MeO_{2/2}]₂,
[HSi(OEt)₂O_{1/2}]₂[SiMe₂O_{2/2}]₁₃₅[SiVinylMeO_{2/2}]₄[Si((CH₂)₃SH)MeO_{2/2}]₂,
[HSi(OEt)₂O_{1/2}]₂[SiMe₂O_{2/2}]₃₃₄[SiVinylMeO_{2/2}]₈[Si((CH₂)₃SH)MeO_{2/2}]₇,
[HSi(OEt)₂O_{1/2}]₂[SiMe₂O_{2/2}]₂₅₈[SiVinylMeO_{2/2}]₆[Si((CH₂)₃SH)MeO_{2/2}]₄,
[HSi(OEt)MeO_{1/2}]₂[SiMe₂O_{2/2}]₆₅[SiVinylMeO_{2/2}][Si((CH₂)₃SH)MeO_{2/2}]₂,
[HSi(OEt)₂O_{1/2}]₂[SiMe₂O_{2/2}]₆₄[SiMeCH₂CH=CH₂O_{2/2}]₇[SiMe(CH₂)₃OOC(CH₂)₂SHO_{2/2}]₃,
[HSi(OEt)₂O_{1/2}]₂[SiMe₂O_{2/2}]₅₄₅[SiVinylMeO_{2/2}]₆₇[Si((CH₂)₃SH)MeO_{2/2}]₃₃,
[HSi(OEt)₂O_{1/2}]₃[SiMe₂O_{2/2}]₂₅₈[SiVinylMeO_{2/2}]₆[Si((CH₂)₃SH)MeO_{2/2}]₄[SiMeO_{3/2}]₁,
[HSi(OMe)₂O_{1/2}]₂[SiMe₂O_{2/2}]₆₅[SiVinylMeO_{2/2}][Si((CH₂)₃SH)MeO_{2/2}]₂,
[HSi(OEt)MeO_{1/2}]₂[SiMe₂O_{2/2}]₁₃₄[Si(CH₂)₄CH=CH₂MeO_{2/2}]₄[Si((CH₂)₆SH)MeO_{2/2}]₂,
[HSi(OEt)MeO_{1/2}]₂[SiMe₂O_{2/2}]₁₂₀[SiMePhO_{2/2}]₂₄[Si(CH₂)₄CH=CH₂MeO_{2/2}]₄[Si((CH₂)₆SH)MeO_{2/2}]₂,
[HSi(OEt)₂O_{1/2}]₂[SiMe₂O_{2/2}]₁₂₀[SiMe(CH₂)₂CF₃O_{2/2}]₁₅[Si(CH₂)₃OC₆H₄OCH₂CH=CH₂MeO_{2/2}]₄[Si((CH₂)₆SH)MeO_{2/2}]₂,
[HSi(OMe)MeO_{1/2}]₂[SiMe(CH₂)₃OCH₂CH(SH)CH₂SHO_{2/2}]₁₁₋ [SiMeVinylO_{2/2}]₅₅[SiMe₂O_{2/2}]₆₇,
[HSi(OEt)₂O_{1/2}[₂[SiMe₂O_{2/2}]₁₇₂[SiMe(CH₂)₃O(CH₂)₃SHO_{2/2}]₄[SiMeO(CDD)O_{2/2}]₁₁
(CDD: 1-Cyclododeca-4,8-dienylrest) und
[HSi(OEt)₂O_{1/2}]₂[SiMe₂O_{2/2}]₇₆[SiMe(CH₂)₃SHO_{2/2}]₄[SiMeO(ECH)O_{2/2}]₁₁
(ECH: 2-(Cyclohex-3-en-1-yl)-ethylrest)
bevorzugt und [HSi(OEt)₂O_{1/2}]₂[SiMe₂O_{2/2}]₆₅[SiVinylMeO_{2/2}]₄[Si((CH₂)₃SH)MeO_{2/2}]₂,
[HSi(OEt)₂O_{1/2}]₂[SiMe₂O_{2/2}]₁₃₅[SiVinylMeO_{2/2}]₄[Si((CH₂)₃SH)MeO_{2/2}]₂,
[HSi(OEt)₂O_{1/2}]₂[SiMe₂O_{2/2}]₃₃₄[SiVinylMeO_{2/2}]₈[Si((CH₂)₃SH)MeO_{2/2}]₇,
[HSi(OEt)₂O_{1/2}]₂[SiMe₂O_{2/2}]₂₅₈[SiVinylMeO_{2/2}]₆[Si((CH₂)₃SH)MeO_{2/2}]₄,
[HSi(OEt)MeO_{1/2}]₂[SiMe₂O_{2/2}]₆₅[SiVinylMeO_{2/2}][Si((CH₂)₃SH)MeO_{2/2}]₂ und
[HSi(OEt)₂O_{1/2}]₂[SiMe₂O_{2/2}]₆₄[SiMeCH₂CH=CH₂O_{2/2}]₇[SiMe(CH₂)₃OOC(CH₂)₂SHO_{2/2}]₃
besonders bevorzugt sind und Me Methylrest, Et Ethylrest, Pr Propylrest, Bu Butylrest, Ph Phenylrest und Vinyl Vinylrest bedeutet.

Vorzugsweise haben die erfindungsgemäßen, Siloxan-Einheiten (A) und (B) aufweisenden Organo(poly)siloxane bei 25°C eine Viskosität von 1 bis 1·10⁶ mPa·s, besonders bevorzugt von 30 bis 1·10⁵ mPa·s.

Die erfindungsgemäßen, Siloxan-Einheiten (A) und (B) enthaltenden Organo(poly)siloxane können nach in der Silicium-Chemie gängigen Methoden hergestellt werden. Danach können sie beispielsweise durch Umsetzung von sowohl mindestens eine endständige Hydroxylgruppe als auch mindestens eine Siloxan-Einheit (B) aufweisenden Organo(poly)siloxanen mit Hydrogenalkoxysilanen nach der in der internationalen Anmeldung mit dem Aktenzeichen PCT/EP91/00795 (Wacker-Chemie GmbH, angemeldet am 25. April 1991) beschriebenen Arbeitsweise hergestellt werden. Die Stöchiometrie der Reaktionsteilnehmer wird dabei so gewählt, daß im Reaktionsprodukt mindestens eine Siloxan-Einheit (A) vorliegt. Die sowohl mindestens eine endständige Hydroxylgruppe als auch mindestens eine Siloxan-Einheit (B) aufweisenden Organo(poly)siloxane können beispielsweise durch Cohydrolyse von Chlor-, Acyloxy- oder Alkoxysilanen vorzugsweise bei einem Druck von 900 bis 1100 hPa und einer Temperatur von 20 bis 180°C hergestellt werden. Hierzu sei beispielsweise auf W. Noll "Chemie und Technologie der Silicone", Verlag Chemie Weinheim, 2. Auflage, 1968, Seite 163ff verwiesen.

Beispielsweise können die erfindungsgemäßen Organo(poly)siloxanmassen Organo(poly)siloxane enthalten, die Siloxan-Einheiten (A), Siloxan-Einheiten (B) sowie Siloxan-Einheiten (C) enthalten.

Ein weiterer Gegenstand der vorliegenden Erfindung sind daher Organo(poly)siloxane, die
(A) Einheiten der Formel (I),
(B) durch Bestrahlung vernetzbare Siloxan-Einheiten sowie
(C) als Photoinitiator wirkende Siloxan-Einheiten enthalten.

Vorzugsweise handelt es sich bei den erfindungsgemäßen, Siloxan-Einheiten (A), (B) und (C) aufweisenden Organo(poly)siloxanen um solche, die Einheiten der Formel (I), (II) und/oder (III), (V) sowie (SiR₂O)-Einheiten mit R gleich der obengenannten Bedeutung aufweisen.

Besonders bevorzugt handelt es sich bei den erfindungsgemäßen, Siloxan-Einheiten (A), (B) und (C) aufweisenden Organo(poly)siloxanen um solche, bestehend aus 0,5 bis 10 % Siloxan-Einheiten der Formel (I), 0,5 bis 20 % der Siloxan-Einheiten der Formel (II) und/oder (III), 0,025 bis 10 % Siloxan-Einheitem der Formel (V) sowie 60 bis 99,975 % (SiR₂O)-Einheiten mit R gleich der obengenannten Bedeutung, bezogen auf die Gesamtanzahl der Siloxan-Einheiten im Molekül.

Beispiele für derartige Organo(poly)siloxane sind
[HSi(OEt)₂O_{1/2}][HSi(OEt)(OPI)O_{1/2}][SiMe₂O_{2/2}]₉₄[SiMeCH₂CH=CH₂O_{2/2}]₅[SiMe(CH₂)₃OOC(CH₂)₂SHO_{2/2}]₃
OPI: 2-Methyl-1-phenyl-1-propanon-2-oxy-,
[HSi(OPI)₂O_{1/2}]_{0,5}[HSi(OMe)(OPI)O_{1/2}]_{0,5}[HSi(OEt)₂O_{1/2}][SiMe₂O_{2/2}]₁₆₈[SiVinylMeO_{2/2}]₁₆[Si((CH₂)₃SH)MeO_{2/2}]₈
OPI: (1-Oxycyclohexyl)phenylketon,
[HSi(OPI)(OEt)O_{1/2}][HSi(OEt)₂O_{1/2}][SiMe₂O_{2/2}]₆₅[SiVinylMeO_{2/2}][Si((CH₂)₃SH)MeO_{2/2}]₂
OPI: 2-Methyl-1-phenyl-1-propanon-2-oxy-,
[HSi(OPI)(OEt)O_{1/2}]_{1/3}[HSi(OEt)₂O_{1/2}]_{2/3}[SiMe₂O_{2/2}]₈₈[SiVinylMeO_{2/2}]₅[Si((CH₂)₃SH)MeO_{2/2}]₂
OPI: (1-Oxycyclohexyl)phenylketon,
[HSi(OPI)(OEt)O_{1/2}][HSi(OEt)₂O_{1/2}][SiMe₂O_{2/2}]₆₅[SiVinylMeO_{2/2}]₃[Si((CH₂)₃SH)MeO_{2/2}]₂
OPI: 2-Ethyl-1-phenyl-1-hexanon-2-oxy-,
[HSi(OMe)MeO_{1/2}][HSi(OPI)MeO_{1/2}][SiMe(CH₂)₃OCH₂CH(SH)CH₂SHO_{2/2}]₁₁[SiMeVinylO_{2/2}]₅₅[SiMe₂O_{2/2}]₆₇
OPI: 2-Methyl-1-phenyl-1-propanon-2-oxy-,
[HSi(OMe)(OPI)O_{1/2}][HSi(OEt)₂O_{1/2}][SiMe₂O_{2/2}]₆₅[SiVinylMeO_{2/2}]₄[Si((CH₂)₃SH)MeO_{2/2}]₂
OPI: 1-(3,4-Dimethylphenyl)-2-methyl-1-propanon-2-oxy-,
[HSi(OEt)MeO_{1/2}][HSi(OPI)MeO_{1/2}][SiMe₂O_{2/2}]₁₂₀[SiMePhO_{2/2}]₂₄[Si(CH₂)₄CH=CH₂MeO_{2/2}]₄[Si((CH₂)₆SH)MeO_{2/2}]₂
OPI: (1-Oxy-3,4-dimethyl-3-cyclohexen-1-yl)phenyl-keton,
[HSi(OMe)₂O_{1/2}][HSi(OMe)(OPI)O_{1/2}][SiMe₂O_{2/2}]₆₅[SiVinylMeO_{2/2}][Si((CH₂)₃SH)MeO_{2/2}]₂
OPI: 2-Ethyl-1-(4-tolyl)-1-hexanon-2-oxy-,
[HSi(OEt)₂O_{1/2}]₃[HSi(OEt)(OPI)O_{1/2}][SiMe₂O_{2/2}]₇₇[SiMeCH₂CH=CH₂O_{2/2}]₇[SiMe(CH₂)₃O(CH₂)₃SHO_{2/2}]₂[SiO_{4/2}]
OPI: 2-Ethyl-1-(4-methoxyphenyl)-1-hexanon-2-oxy-,
[HSi(OEt)₂O_{1/2}][HSi(OEt)(OPI)O_{1/2}][SiMe₂O_{2/2}]₁₂₁[Si(CH₂)₃OOCCH=CH₂MeO_{2/2}]₁[SiVinylMeO_{2/2}]₄[Si((CH₂)₃SH)MeO_{2/2}]₂
OPI: 1-(3,4-Dimethylphenyl)-2-methyl-1-propanon-2-oxy-,
[HSi(OMe)(OBu)O_{1/2}][HSiPh(OPI)O_{1/2}][SiMe₂O_{2/2}]₁₂₀[SiMePhO_{2/2}]₄₄[SiCH₂CH=CH₂MeO_{2/2}]₄[Si((CH₂)₄SH)MeO_{2/2}]₂
OPI: (1-Oxy-4-methyl-3-cyclohexen-1-yl)phenylketon,
[HSi(OⁿBu)₂O_{1/2}][HSiMe(OPI)O_{1/2}][SiMe₂O_{2/2}]₂₃₄[SiMe(CH₂)₄CH=CH₂O_{2/2}]₃[SiMe(CH₂)₃OCH₂CH=CH₂O_{2/2}]₂₂[SiMe(CH₂)₃SHO_{2/2}]₁₈
OPI: 4-Methyl-5-phenyl-5-oxo-pentansäuremethylester-4-oxy-,
[HSi(OⁿPr)₂O_{1/2}][HSi(OⁿPr)(OPI)O_{1/2}][SiMe₂O_{2/2}]₁₅₈[SiMe(CH₂)₃OOCCH=CH₂O_{2/2}]₁₁
OPI: 1-(4-Fluorphenyl)-2-methyl-1-propanon-2-oxy-,
[HSi(OPI)(OEt)O_{1/2}][HSi(OⁿBu)₂O_{1/2}][SiMe₂O_{2/2}]₈₅[SiVinylMeO_{2/2}]₅[Si((CH₂)₃SH)MeO_{2/2}]₂
OPI: 1-(4-Methoxyphenyl)-2-methyl-1-propanon-2-oxy- und
[HSi(OPI)₂O_{1/2}]_{1/3}[HSi(OⁱPr)₂O_{1/2}]_{2/3}[SiMeC₂H₄CF₃O_{2/2}]₂₇₄[Si(CH₂)₃OOCCH=CH₂O_{3/2}]
OPI: 2-Methyl-1-(4-methoxyphenyl)-1-propanon-2-oxy-,
wobei [HSi(OEt)₂O_{1/2}][HSi(OEt)(OPI)O_{1/2}][SiMe₂O_{2/2}]₉₄[SiMeCH₂CH=CH₂O_{2/2}]₅[SiMe(CH₂)₃OOC(CH₂)₂SHO_{2/2}]₃
OPI: 2-Methyl-1-phenyl-1-propanon-2-oxy-,
[HSi(OPI)₂O_{1/2}]_{0,5}[HSi(OMe)(OPI)O_{1/2}]_{0,5}[HSi(OEt)₂O_{1/2}][SiMe₂O_{2/2}]₁₆₈[SiVinylMeO_{2/2}]₁₆[Si((CH₂)₃SH)MeO_{2/2}]₈
OPI: (1-Oxycyclohexyl)phenylketon,
[HSi(OPI)(OEt)O_{1/2}][HSi(OEt)₂O_{1/2}][SiMe₂O_{2/2}]₆₅[SiVinylMeO_{2/2}][Si((CH₂)₃SH)MeO_{2/2}]₂
OPI: 2-Methyl-1-phenyl-1-propanon-2-oxy-,
[HSi(OPI)(OEt)O_{1/2}]_{1/3}[HSi(OEt)₂O_{1/2}]_{2/3}[SiMe₂O_{2/2}]₈₈[SiVinylMeO_{2/2}]₅[Si((CH₂)₃SH)MeO_{2/2}]₂
OPI: (1-Oxycyclohexyl)phenylketon,
[HSi(OPI)(OEt)O_{1/2}][HSi(OEt)₂O_{1/2}][SiMe₂O_{2/2}]₆₅[SiVinylMeO_{2/2}]₃[Si((CH₂)₃SH)MeO_{2/2}]₂
OPI: 2-Ethyl-1-phenyl-1-hexanon-2-oxy-,
[HSi(OMe)MeO_{1/2}][HSi(OPI)MeO_{1/2}][SiMe(CH₂)₃OCH₂CH(SH)CH₂SHO_{2/2}]₁₁[SiMeVinylO_{2/2}]₅₅[SiMe₂O_{2/2}]₆₇
OPI: 2-Methyl-1-phenyl-1-propanon-2-oxy-,
[HSi(OMe)(OPI)O_{1/2}][HSi(OEt)₂O_{1/2}][SiMe₂O_{2/2}]₆₅[SiVinylMeO_{2/2}]₄[Si((CH₂)₃SH)MeO_{2/2}]₂
OPI: 1-(3,4-Dimethylphenyl)-2-methyl-1-propanon-2-oxy-,
[HSi(OEt)MeO_{1/2}][HSi(OPI)MeO_{1/2}][SiMe₂O_{2/2}]₁₂₀[SiMePhO_{2/2}]₂₄[Si(CH₂)₄CH=CH₂MeO_{2/2}]₄[Si((CH₂)₆SH)MeO_{2/2}]₂
OPI: (1-Oxy-3,4-dimethyl-3-cyclohexen-1-yl)phenyl-keton und
[HSi(OMe)₂O_{1/2}][HSi(OMe)(OPI)O_{1/2}][SiMe₂O_{2/2}]₆₅[SiVinylMeO_{2/2}][Si((CH₂)₃SH)MeO_{2/2}]₂
OPI: 2-Ethyl-1-(4-tolyl)-1-hexanon-2-oxy-
bevorzugt und
[HSi(OEt)₂O_{1/2}][HSi(OEt)(OPI)O_{1/2}][SiMe₂O_{2/2}]₉₄[SiMeCH₂CH=CH₂O_{2/2}]₅[SiMe(CH₂)₃OOC(CH₂)₂SHO_{2/2}]₃
OPI: 2-Methyl-1-phenyl-1-propanon-2-oxy-, [HSi(OPI)₂O_{1/2}]_{0,5}[HSi(OMe)(OPI)O_{1/2}]_{0,5}[HSi(OEt)₂O_{1/2}][SiMe₂O_{2/2}]₁₆₈[SiVinylMeO_{2/2}]₁₆[Si((CH₂)₃SH)MeO_{2/2}]₈
OPI: (1-Oxycyclohexyl)phenylketon,
[HSi(OPI)(OEt)O_{1/2}][HSi(OEt)₂O_{1/2}][SiMe₂O_{2/2}]₆₅[SiVinylMeO_{2/2}][Si((CH₂)₃SH)MeO_{2/2}]₂
OPI: 2-Methyl-1-phenyl-1-propanon-2-oxy-,
[HSi(OPI)(OEt)O_{1/2}]_{1/3}[HSi(OEt)₂O_{1/2}]_{2/3}[SiMe₂O_{2/2}]₈₈[SiVinylMeO_{2/2}]₅[Si((CH₂)₃SH)MeO_{2/2}]₂
OPI: (1-Oxycyclohexyl)phenylketon und
[HSi(OPI)(OEt)O_{1/2}][HSi(OEt)₂O_{1/2}][SiMe₂O_{2/2}]₆₅[SiVinylMeO_{2/2}]₃[Si((CH₂)₃SH)MeO_{2/2}]₂
OPI: 2-Ethyl-1-phenyl-1-hexanon-2-oxy-
besonders bevorzugt sind und Me Methylrest, Et Ethylrest, Pr Propylrest, Bu Butylrest, Ph Phenylrest und Vinyl Vinylrest bedeutet.

Vorzugsweise haben die erfindungsgemäßen, Siloxan-Einheiten (A), (B) und (C) aufweisenden Organo(poly)siloxane bei 25°C eine Viskosität von 1 bis 1·10⁶ mPa·s, besonders bevorzugt von 30 bis 1·10⁵ mPa·s.

Die erfindungsgemäßen, Siloxan-Einheiten (A), (B) und (C) enthaltenden Organo(poly)siloxane können nach in der Silicium-Chemie gängigen Methoden hergestellt werden. Beispielsweise erfolgt ihre Herstellung durch Umsetzung von Siloxan-Einheiten (A) und (B) aufweisenden Siloxanen mit mindestens eine Hydroxylgruppe aufweisenden Photoinitiatoren, wie etwa 2-Hydroxy-2-methyl-1-phenylpropan, 1-Benzoylcyclohexan-1-ol und m-Hydroxybenzil, nach einer in W. Noll "Chemie und Technologie der Silicone", Verlag Chemie Weinheim, 2. Auflage, 1968, Seite 556 beschriebenen Verfahrensweise unter Entfernen des bei der Umsetzung entstehenden Alkohols durch Destillation bei dem Druck der umgebenden Atmosphäre oder erhöhtem Druck (bis 10⁵ hPa) oder erniedrigtem Druck (bis 10⁻⁶ hPa) und einer Temperatur von 20 bis 220°C, vorzugsweise bei einem Druck von 900 bis 1100 hPa und einer Temperatur von 30 bis 180°C. Die Stöchiometrie der Reaktionspartner muß selbstverständlich so gewählt werden, daß im Reaktionsprodukt mindestens eine Siloxan-Einheit (A) vorliegt. Des weiteren können als mindestens eine Hydroxylgruppe aufweisende Photoinitiatoren alle die in DE 2759766 (Merck Patent GmbH; ausgegeben am 14. April 1989) genannten Verbindungen eingesetzt werden.

Beispielsweise können die erfindungsgemäßen Organo(poly)siloxanmassen Organo(poly)siloxane, die sowohl Siloxan-Einheiten (A) als auch Siloxan-Einheiten (C) aufweisen, und Organo(poly)siloxane, die Siloxan-Einheiten (B) aufweisen, enthalten.

Ein weiterer Gegenstand der vorliegenden Erfindung sind daher Organo(poly)siloxane, die
(A) Einheiten der Formel (I)
   und
(C) als Photoinitiator wirkende Siloxan-Einheiten enthalten.

Vorzugsweise handelt es sich bei den erfindungsgemäßen, Siloxan-Einheiten (A) und (C) aufweisenden Organo(poly)siloxanen um solche, die Einheiten der Formel (I) und (V) sowie (SiR₂O)-Einheiten mit R gleich der obengenannten Bedeutung aufweisen.

Besonders bevorzugt handelt es sich bei den erfindungsgemäßen, Siloxan-Einheiten (A) und (C) aufweisenden Organo(poly)siloxanen um solche, bestehend aus 0,5 bis 10 % Siloxan-Einheiten der Formel (I), 0,01 bis 10 % der Siloxan-Einheiten der Formel (V) sowie 20 bis 99,49 % (SiR₂O)-Einheiten mit R gleich der obengenannten Bedeutung, bezogen auf die Gesamtanzahl der Siloxan-Einheiten im Molekül.

Beispiele für derartige Organo(poly)siloxane sind
[HSi(OPI)(OEt)O_{1/2}][HSi(OEt)₂O_{1/2}][SiMe₂O_{2/2}]₆₅
OPI: 2-Methyl-1-phenyl-1-propanon-2-oxy-,
[HSi(OPI)(OEt)O_{1/2}]_{1/3}[HSi(OEt)₂O_{1/2}]_{2/3}[SiMe₂O_{2/2}]₈₈
OPI: (1-Oxycyclohexyl)phenylketon,
[HSi(OPI)(OEt)O_{1/2}][HSi(OEt)₂O_{1/2}][SiMe₂O_{2/2}]₆₅
OPI: 2-Ethyl-1-phenyl-1-hexanon-2-oxy-,
[HSi(OEt)MeO_{1/2}][HSiMe(OPI)O_{1/2}][SiMe₂O_{2/2}]₈₄
OPI: 2-Methyl-1-phenyl-1-propanon-2-oxy-,
[HSi(OPI)₂O_{1/2}]_{0,5}[HSi(OMe)O_{2/2}]_{0,5}[HSi(OEt)₂O_{1/2}][SiMe₂O_{2/2}]₁₆₈
OPI: (1-Oxycyclohexyl)phenylketon,
[HSi(OMe)(OPI)O_{1/2}][HSi(OEt)₂O_{1/2}[SiMe₂O_{2/2}]₁₁₅
OPI: 1-(3,4-Dimethylphenyl)-2-methyl-1-propanon-2-oxy-,
[HSi(OEt)MeO_{1/2}][HSi(OPI)MeO_{1/2}][SiMe₂O_{2/2}]₁₂₀[SiMePhO_{2/2}]₂₄
OPI: (1-Oxy-3,4-dimethyl-3-cyclohexen-1-yl)phenyl-keton,
[HSi(OMe)₂O_{1/2}][HSi(OMe)(OPI)O_{1/2}][SiMe₂O_{2/2}]₆₅
OPI: 2-Ethyl-1-(4-tolyl)-1-hexanon-2-oxy-,
[HSi(OMe)MeO_{1/2}][HSi(OPI)MeO_{1/2}][SiMe₂O_{2/2}]₆₇
OPI: 2-Methyl-1-phenyl-1-propanon-2-oxy,
[HSi(OPI)(OEt)O_{1/2}][HSi(OⁿBu)₂O_{1/2}][SiMe₂O_{2/2}]₈₅
OPI: 1-(4-Methoxyphenyl)-2-methyl-1-propanon-2-oxy-,
[HSi(OPI)₂O_{1/2}]_{1/3}[HSi(OⁱPr)₂O_{1/2}]_{2/3}[SiMeC₂H₄CF₃O_{2/2}]₂₇₄
OPI: 2-Methyl-1-(4-methoxyphenyl)-1-propanon-2-oxy-,
[HSi(OEt)₂O_{1/2}]₃[HSi(OEt)(OPI)O_{1/2}][SiMe₂O_{2/2}]₇₄[SiO_{4/2}]
OPI: 2-Ethyl-1-(4-methoxyphenyl)-1-hexanon-2-oxy-,
[HSi(OEt)₂O_{1/2}][HSi(OEt)(OPI)O_{1/2}][SiMe₂O_{2/2}]₁₁
OPI: 1-(3,4-Dimethylphenyl)-2-methyl-1-propanon-2-oxy-,
[HSi(OMe)(OⁿBu)O_{1/2}][HSiPh(OPI)O_{1/2}][SiMe₂O_{2/2}]₁₂₀[SiMePhO_{2/2}]₁₄
OPI: (1-Oxy-4-methyl-3-cyclohexen-1-yl)phenylketon,
[HSi(OⁿBu)₂O_{1/2}][HSiMe(OPI)O_{1/2}][SiMe₂O_{2/2}]₃₄₄
OPI: 4-Methyl-5-phenyl-5-oxo-pentansäuremethylester-4-oxy-
und
[HSi(OⁿPr)₂O_{1/2}][HSiMe(OⁿPr(OPI))O_{1/2}][SiMe₂O_{2/2}]₁₅
OPI: 1-(4-Fluorphenyl)-2-methyl-1-propanon-2-oxy-,
wobei
[HSi(OPI)(OEt)O_{1/2}][HSi(OEt)₂O_{1/2}][SiMe₂O_{2/2}]₆₅
OPI: 2-Methyl-1-phenyl-1-propanon-2-oxy-, [HSi(OPI)(OEt)O_{1/2}]_{1/3}[HSi(OEt)₂O_{1/2}]_{2/3}[SiMe₂O_{2/2}]₈₈
OPI: (1-Oxycyclohexyl)phenylketon,
[HSi(OPI)(OEt)O_{1/2}][HSi(OEt)₂O_{1/2}][SiMe₂O_{2/2}]₆₅
OPI: 2-Ethyl-1-phenyl-1-hexanon-2-oxy-,
[HSi(OEt)MeO_{1/2}][HSiMe(OPI)O_{1/2}][SiMe₂O_{2/2}]₈₄
OPI: 2-Methyl-1-phenyl-1-propanon-2-oxy-,
[[HSi(OPI)₂O_{1/2}]_{0,5}][HSi(OMe)O_{1/2}]_{0,5}[HSi(OEt)₂O_{1/2}][SiMe₂O_{2/2}]₁₆₈
OPI: (1-Oxycyclohexyl)phenylketon,
[HSi(OMe)(OPI)O_{1/2}][HSi(OEt)₂O_{1/2}][SiMe₂O_{2/2}]₁₁₅
OPI: 1-(3,4-Dimethylphenyl)-2-methyl-1-propanon-2-oxy-,
[HSi(OEt)MeO_{1/2}][HSi(OPI)MeO_{1/2}][SiMe₂O_{2/2}]₁₂₀[SiMePhO_{2/2}]₂₄
OPI: (1-Oxy-3,4-dimethyl-3-cyclohexen-1-yl)phenyl-keton,
[HSi(OMe)₂O_{1/2}][HSi(OMe)(OPI)O_{1/2}][SiMe₂O_{2/2}]₆₅
OPI: 2-Ethyl-1-(4-tolyl)-1-hexanon-2-oxy- und
[HSi(OMe)MeO_{1/2}][HSi(OPI)MeO_{1/2}][SiMe₂O_{2/2}]₆₇
OPI: 2-Methyl-1-phenyl-1-propanon-2-oxy
bevorzugt und
[HSi(OPI)(OEt)O_{1/2}][HSi(OEt)₂O_{1/2}][SiMe₂O_{2/2}]₆₅
OPI: 2-Methyl-1-phenyl-1-propanon-2-oxy-,
[HSi(OPI)(OEt)O_{1/2}]_{1/3}[HSi(OEt)₂O_{1/2}]_{2/3}[SiMe₂O_{2/2}]₈₈
OPI: (1-Oxycyclohexyl)phenylketon,
[HSi(OPI)(OEt)O_{1/2}][HSi(OEt)₂O_{1/2}][SiMe₂O_{2/2}]₆₅
OPI: 2-Ethyl-1-phenyl-1-hexanon-2-oxy-,
[HSi(OEt)MeO_{1/2}][HSiMe(OPI)O_{1/2}][SiMe₂O_{2/2}]₈₄
OPI: 2-Methyl-1-phenyl-1-propanon-2-oxy- und
[[HSi(OPI)₂O_{1/2}]_{0,5}][HSi(OMe)O_{1/2}]_{0,5}[HSi(OEt)₂O_{1/2}][SiMe₂O_{2/2}]₁₆₈
OPI: (1-Oxycyclohexyl)phenylketon
besonders bevorzugt sind und Me Methylrest, Et Ethylrest, Pr Propylrest, Bu Butylrest und Ph Phenylrest bedeutet.

Vorzugsweise haben die erfindungsgemäßen, Siloxan-Einheiten (A) und (C) enthaltenden Organo(poly)siloxane bei 25°C eine Viskosität von 1 bis 1·10⁶ mPa·s, besonders bevorzugt von 30 bis 1·10⁵ mPa·s.

Die erfindungsgemäßen, Siloxan-Einheiten (A) und (C) enthaltenden Organo(poly)siloxane können nach in der Silicium-Chemie gängigen Methoden hergestellt werden. Beispielsweise erfolgt ihre Herstellung durch Umsetzung von Siloxan-Einheiten (A) aufweisenden Siloxanen mit mindestens eine Hydroxylgruppe aufweisenden Photoinitiatoren, wie etwa 2-Hydroxy-2-methyl-1-phenylpropan, 1-Benzoylcyclohexan-1-ol und m-Hydroxybenzil, nach einer in W. Noll "Chemie und Technologie der Silicone", Verlag Chemie Weinheim, 2. Auflage, 1968, Seite 556 beschriebenen Verfahrensweise unter Entfernen des bei der Umsetzung entstehenden Alkohols durch Destillation bei dem Druck der umgebenden Atmosphäre oder erhöhtem Druck (bis 10⁵ hPa) oder erniedrigtem Druck (bis 10⁻⁶ hPa) und einer Temperatur von 20 bis 220°C, vorzugsweise bei einem Druck von 900 bis 1100 hPa und einer Temperatur von 30 bis 180°C. Die Stöchiometrie der Reaktionspartner muß selbstverständlich so gewählt werden, daß im Reaktionsprodukt noch mindestens eine Siloxan-Einheit (A) vorliegt. Des weiteren können als mindestens eine Hydroxylgruppe aufweisende Photoinitiatoren alle die in DE 2759766 (Merck Patent GmbH; ausgegeben am 14. April 1989) genannten Verbindungen eingesetzt werden.

Die erfindungsgemäßen, Siloxan-Einheiten (A) und (C) enthaltenden Organo(poly)siloxane haben den Vorteil, daß sie einerseits sehr gut mit Organo(poly)siloxanen mischbar sind und andererseits durch die Blockierung der Hydroxylgruppe des Photoinitiators die Lagerstabilität der erfindungsgemäßen Organo(poly)siloxanmasse erhöht wird.

Beispielsweise können die erfindungsgemäßen Organo(poly)siloxanmassen Organo(poly)siloxane, die sowohl Siloxan-Einheiten (B) als auch Siloxan-Einheiten (C) aufweisen und Organo(poly)siloxane, welche Siloxan-Einheiten (A) aufweisen, enthalten.

Vorzugsweise handelt es sich bei den erfindungsgemäßen, Siloxan-Einheiten (B) und (C) aufweisenden Organo(poly)siloxanen um solche, die Einheiten der Formel (V), (II) und/oder (III) sowie (SiR₂O)-Einheiten mit R gleich der obengenannten Bedeutung aufweisen.

Besonders bevorzugt handelt es sich bei den erfindungsgemäßen, Siloxan-Einheiten (B) und (C) aufweisenden Organo(poly)siloxanen um solche, bestehend aus 0,025 bis 10 % Siloxan-Einheiten der Formel (V), 0,5 bis 20 % der Siloxan-Einheiten der Formel (II) und/oder (III) sowie 70 bis 99,475 % (SiR₂O)-Einheiten mit R gleich der obengenannten Bedeutung, bezogen auf die Gesamtanzahl der Siloxan-Einheiten im Molekül.

Beispiele für derartige Organo(poly)siloxane sind
[HSi(OPI)(OEt)O_{1/2}]₂[SiMe₂O_{2/2}]₆₅[SiVinylMeO_{2/2}]₄[Si((CH₂)₃SH)MeO_{2/2}]₂
OPI: 2-Methyl-1-phenyl-1-propanon-2-oxy-,
[HSi(OPI)₂O_{1/2}]₂[SiMe₂O_{2/2}]₆₅[SiVinylMeO_{2/2}]₄[Si((CH₂)₃SH)MeO_{2/2}]₂
OPI: 2-Methyl-1-phenyl-1-propanon-2-oxy-,
[HSi(OPI)(OEt)O_{1/2}]₂[SiMe₂O_{2/2}]₆₅[SiVinylMeO_{2/2}]₅[Si((CH₂)₃SH)MeO_{2/2}]₂
OPI: (1-Oxycyclohexyl)phenylketon,
[HSi(OPI)₂O_{1/2}]₂[SiMe₂O_{2/2}]₆₅[SiVinylMeO_{2/2}]₅[Si((CH₂)₃SH)MeO_{2/2}]₂
OPI: (1-Oxycyclohexyl)phenylketon,
[HSi(OMe)(OPI)O_{1/2}]₂[SiMe₂O_{2/2}]₆₅[SiVinylMeO_{2/2}]₄[Si((CH₂)₃SH)MeO_{2/2}]₂
OPI: 2-Methyl-1-phenyl-1-propanon-2-oxy-,
[HSi(OPI)₂O_{1/2}][HSi(OMe)(OPI)O_{1/2}][SiMe₂O_{2/2}]₆₈[SiVinylMeO_{2/2}]₆[Si((CH₂)₃SH)MeO_{2/2}]₄
OPI: (1-Oxycyclohexyl)phenylketon,
[HSi(OPI)₂O_{1/2}][HSi(OMe)(OPI)O_{1/2}][SiMe₂O_{2/2}]₆₈[SiVinylMeO_{2/2}]₆[Si((CH₂)₃SH)MeO_{2/2}]₄
OPI: 2-Methyl-1-phenyl-1-propanon-2-oxy-,
[HSi(OMe)(OPI)O_{1/2}]₂[SiMe₂O_{2/2}]₆₅[SiVinylMeO_{2/2}]₄[Si((CH₂)₃SH)MeO_{2/2}]₂
OPI: (1-Oxycyclohexyl)phenylketon,
[HSi(OPI)MeO_{1/2}]₂[SiMe₂O_{2/2}]₁₁₂[Si(CH₂)₄CH=CH₂MeO_{2/2}]₄[Si((CH₂)₆SH)MeO_{2/2}]₂
OPI: 2-Methyl-1-phenyl-1-propanon-2-oxy-,
[HSi(OMe)(OPI)O_{1/2}]₂[SiMe₂O_{2/2}]₆₅[SiVinylMeO_{2/2}]₄[Si((CH₂)₃SH)MeO_{2/2}]₂
OPI: 1-(3,4-Dimethylphenyl)-2-methyl-1-propanon-2-oxy-,
[HSi(OPI)MeO_{1/2}]₂[SiMe(CH₂)₃OCH₂CH(SH)CH₂SHO_{2/2}]₁₁[SiMeVinylO_{2/2}]₃₅[SiMe₂O_{2/2}]₆₇
OPI: 2-Methyl-1-phenyl-1-propanon-2-oxy-,
[HSi(OEt)(OPI)O_{1/2}]₂[SiMe₂O_{2/2}]₉₄[SiMeCH₂CH=CH₂O_{2/2}]₅[SiMe(CH₂)₃OOC(CH₂)₂SHO_{2/2}]₃
OPI: 2-Methyl-1-phenyl-1-propanon-2-oxy-,
[HSi(OPI)(OEt)O_{1/2}]₂[SiMe₂O_{2/2}]₈₅[SiVinylMeO_{2/2}]₅[Si((CH₂)₃SH)MeO_{2/2}]₂
OPI: 1-(4-Methoxyphenyl)-2-methyl-1-propanon-2-oxy-,
[HSi(OPI)(OEt)O_{1/2}]₂[SiMe₂O_{2/2}]₁₆₅[SiVinylMeO_{2/2}]₁₃[Si((CH₂)₃SH)MeO_{2/2}]₁₂
OPI: 2-Ethyl-1-phenyl-1-hexanon-2-oxy-,
[HSiPh(OPI)O_{1/2}]₂[SiMe₂O_{2/2}]₁₂₀[SiMePhO_{2/2}]₁₄[SiCH₂CH=CH₂MeO_{2/2}]₄[Si((CH₂)₄SH)MeO_{2/2}]₂
OPI: (1-Oxy-4-methyl-3-cyclohexen-1-yl)phenylketon,
[HSiMe(OPI)O_{1/2}]₂[SiMe₂O_{2/2}]₂₃₄[SiMe(CH₂)₄CH=CH₂O_{2/2}]₃[SiMe(CH₂)₃OCH₂CH=CH₂O_{2/2}]₂₂[SiMe(CH₂)₃SHO_{2/2}]₁₈
OPI: 4-Methyl-5-phenyl-5-oxo-pentansäuremethylester-4-oxy-,
[HSi(OPI)PhO_{1/2}]₂[SiMe(CH₂)₃OCH₂CH(SH)CH₂SHO_{2/2}]₁₁[SiMe(CH₂)₅CH=CH(CH₂)₃CH=CH₂O_{2/2}]₅[SiMe₂O_{2/2}]₆₇
OPI: 2-Methyl-1-phenyl-1-propanon-2-oxy-,
[HSi(OⁿPr)(OPI)O_{1/2}]₂[SiMe₂O_{2/2}]₅₈[SiMe(CH₂)₃OOCCH=CH₂O_{2/2}]₉
OPI: 1-(4-Fluorphenyl)-2-methyl-1-propanon-2-oxy-,
[HSi(OPI)O_{1/2}]₂[SiMe₂O_{2/2}]₅₈[SiMe(CH₂)₃OOCCH=CH₂O_{2/2}]₉
OPI: 2-Methyl-1-phenyl-1-propanon-2-oxy-,
[HSi(OPI)(OMe)O_{1/2}]₃[SiMeC₂H₄CF₃O_{2/2}]₁₇₄[Si(CH₂)₃OOCCH=CH₂O_{3/2}]
OPI: 2-Methyl-1-(4-methoxyphenyl)-1-propanon-2-oxy-,
[HSi(OPI)MeO_{1/2}]₂[SiMe₂O_{2/2}]₁₂₀[SiMePhO_{2/2}]₂₄[Si(CH₂)₄CH=CH₂MeO_{2/2}]₄[Si((CH₂)₆SH)MeO_{2/2}]₂
OPI: (1-Oxy-3,4-dimethyl-3-cyclohexen-1-yl)phenyl-keton,
[HSi(OMe)(OPI)O_{1/2}]₂[SiMe₂O_{2/2}]₆₅[SiVinylMeO_{2/2}][Si((CH₂)₃SH)MeO_{2/2}]₂
OPI: 2-Ethyl-1-(4-tolyl)-1-hexanon-2-oxy-,
[HSi(OEt)(OPI)O_{1/2}]₄[SiMe₂O_{2/2}]₇₇[SiMeCH₂CH=CH₂O_{2/2}]₇[SiMe(CH₂)₃O(CH₂)₃SHO_{2/2}]₂[SiO_{4/2}]
OPI: 2-Ethyl-1-(4-methoxyphenyl)-1-hexanon-2-oxy- und
[HSi(OPI)₂O_{1/2}]₂[SiMe₂O_{2/2}]₁₂₁[Si(CH₂)₃OOCCH=CH₂MeO_{2/2}][SiVinylMeO_{2/2}]₄[Si((CH₂)₃SH)MeO_{2/2}]₂
OPI: 1-(3,4-Dimethylphenyl)-2-methyl-1-propanon-2-oxy-,
wobei
[HSi(OMe)(OPI)O_{1/2}]₂[SiMe₂O_{2/2}]₆₅[SiVinylMeO_{2/2}]₄[Si((CH₂)₃SH)MeO_{2/2}]₂
OPI: 1-(3,4-Dimethylphenyl)-2-methyl-1-propanon-2-oxy-,
[HSi(OPI)MeO_{1/2}]₂[SiMe(CH₂)₃OCH₂CH(SH)CH₂SHO_{2/2}]₁₁[SiMeVinylO_{2/2}]₃₅[SiMe₂O_{2/2}]₆₇
OPI: 2-Methyl-1-phenyl-1-propanon-2-oxy-,
[HSi(OEt)(OPI)O_{1/2}]₂[SiMe₂O_{2/2}]₉₄[SiMeCH₂CH=CH₂O_{2/2}]₅[SiMe(CH₂)₃OOC(CH₂)₂SHO_{2/2}]₃
OPI: 2-Methyl-1-phenyl-1-propanon-2-oxy-,
[HSi(OPI)(OEt)O_{1/2}]₂[SiMe₂O_{2/2}]₆₅[SiVinylMeO_{2/2}]₄[Si((CH₂)₃SH)MeO_{2/2}]₂
OPI: 2-Methyl-1-phenyl-1-propanon-2-oxy-,
[HSi(OPI)₂O_{1/2}]₂[SiMe₂O_{2/2}]₆₅[SiVinylMeO_{2/2}]₄[Si((CH₂)₃SH)MeO_{2/2}]₂
OPI: 2-Methyl-1-phenyl-1-propanon-2-oxy-,
[HSi(OPI)(OEt)O_{1/2}]₂[SiMe₂O_{2/2}]₆₅[SiVinylMeO_{2/2}]₅[Si((CH₂)₃SH)MeO_{2/2}]₂
OPI: (1-Oxycyclohexyl)phenylketon,
[HSi(OPI)₂O_{1/2}]₂[SiMe₂O_{2/2}]₆₅[SiVinylMeO_{2/2}]₅[Si((CH₂)₃SH)MeO_{2/2}]₂
OPI: (1-Oxycyclohexyl)phenylketon,
[HSi(OMe)(OPI)O_{1/2}]₂[SiMe₂O_{2/2}]₆₅[SiVinylMeO_{2/2}]₄[Si((CH₂)₃SH)MeO_{2/2}]₂
OPI: 2-Methyl-1-phenyl-1-propanon-2-oxy-,
[HSi(OPI)₂O_{1/2}][HSi(OMe)(OPI)O_{1/2}][SiMe₂O_{2/2}]₆₈[SiVinylMeO_{2/2}]₆[Si((CH₂)₃SH)MeO_{2/2}]₄
OPI: (1-Oxycyclohexyl)phenylketon,
[HSi(OPI)₂O_{1/2}][HSi(OMe)(OPI)O_{1/2}][SiMe₂O_{2/2}]₆₈[SiVinylMeO_{2/2}]₆[Si((CH₂)₃SH)MeO_{2/2}]₄
OPI: 2-Methyl-1-phenyl-1-propanon-2-oxy-,
[HSi(OMe)(OPI)O_{1/2}]₂[SiMe₂O_{2/2}]₆₅[SiVinylMeO_{2/2}]₄[Si((CH₂)₃SH)MeO_{2/2}]₂
OPI: (1-Oxycyclohexyl)phenylketon und
[HSi(OPI)MeO_{1/2}]₂[SiMe₂O_{2/2}]₁₁₂[Si(CH₂)₄CH=CH₂MeO_{2/2}]₄[Si((CH₂)₆SH)MeO_{2/2}]₂
OPI: 2-Methyl-1-phenyl-1-propanon-2-oxy-
bevorzugt und
[HSi(OPI)(OEt)O_{1/2}]₂[SiMe₂O_{2/2}]₆₅[SiVinylMeO_{2/2}]₄[Si((CH₂)₃SH)MeO_{2/2}]₂
OPI: 2-Methyl-1-phenyl-1-propanon-2-oxy-,
[HSi(OPI)₂O_{1/2}]₂[SiMe₂O_{2/2}]₆₅[SiVinylMeO_{2/2}]₄[Si((CH₂)₃SH)MeO_{2/2}]₂
OPI: 2-Methyl-1-phenyl-1-propanon-2-oxy-,
[HSi(OPI)(OEt)O_{1/2}]₂[SiMe₂O_{2/2}]₆₅[SiVinylMeO_{2/2}]₅[Si((CH₂)₃SH)MeO_{2/2}]₂
OPI: (1-Oxycyclohexyl)phenylketon,
[HSi(OPI)₂O_{1/2}]₂[SiMe₂O_{2/2}]₆₅[SiVinylMeO_{2/2}]₅[Si((CH₂)₃SH)MeO_{2/2}]₂
OPI: (1-Oxycyclohexyl)phenylketon,
[HSi(OMe)(OPI)O_{1/2}]₂[SiMe₂O_{2/2}]₆₅[SiVinylMeO_{2/2}]₄[Si((CH₂)₃SH)MeO_{2/2}]₂
OPI: 2-Methyl-1-phenyl-1-propanon-2-oxy-,
[HSi(OPI)₂O_{1/2}][HSi(OMe)(OPI)O_{1/2}][SiMe₂O_{2/2}]₆₈[SiVinylMeO_{2/2}]₆[Si((CH₂)₃SH)MeO_{2/2}]₄
OPI: (1-Oxycyclohexyl)phenylketon,
[HSi(OPI)₂O_{1/2}][HSi(OMe)(OPI)O_{1/2}][SiMe₂O_{2/2}]₆₈[SiVinylMeO_{2/2}]₆[Si((CH₂)₃SH)MeO_{2/2}]₄
OPI: 2-Methyl-1-phenyl-1-propanon-2-oxy-,
[HSi(OMe)(OPI)O_{1/2}]₂[SiMe₂O_{2/2}]₆₅[SiVinylMeO_{2/2}]₄[Si((CH₂)₃SH)MeO_{2/2}]₂
OPI: (1-Oxycyclohexyl)phenylketon und
[HSi(OPI)MeO_{1/2}]₂[SiMe₂O_{2/2}]₁₁₂[Si(CH₂)₄CH=CH₂MeO_{2/2}]₄[Si((CH₂)₆SH)MeO_{2/2}]₂
OPI: 2-Methyl-1-phenyl-1-propanon-2-oxy-
besonders bevorzugt sind und Me Methylrest, Et Ethylrest, Pr Propylrest, Ph Phenylrest und Vinyl Vinylrest bedeutet.

Vorzugsweise haben die erfindungsgemäßen, Siloxan-Einheiten (B) und (C) enthaltenden Organo(poly)siloxane bei 25°C eine Viskosität von 1 bis 1·10⁶ mPa·s, besonders bevorzugt von 30 bis 1·10⁵ mPa·s.

Die erfindungsgemäßen, Siloxan-Einheiten (B) und (C) enthaltenden Organo(poly)siloxane können nach in der Silicium-Chemie gängigen Methoden hergestellt werden. Beispielsweise erfolgt ihre Herstellung durch Umsetzung von Siloxan-Einheiten (A) und (B) aufweisenden Siloxanen mit mindestens eine Hydroxylgruppe aufweisenden Photoinitiatoren, wie etwa 2-Hydroxy-2-methyl-1-phenylpropan, 1-Benzoylcyclohexan-1-ol und m-Hydroxybenzil, nach einer in W. Noll "Chemie und Technologie der Silicone", Verlag Chemie Weinheim, 2. Auflage, 1968, Seite 556 beschriebenen Verfahrensweise unter Entfernen des bei der Umsetzung entstehenden Alkohols durch Destillation bei dem Druck der umgebenden Atmosphäre oder erhöhtem Druck (bis 10⁵ hPa) oder erniedrigtem Druck (bis 10⁻⁶ hPa) und einer Temperatur von 20 bis 220°C, vorzugsweise bei einem Druck von 900 bis 1100 hPa und einer Temperatur von 30 bis 180°C. Die Stöchiometrie der Reaktionspartner muß so gewählt werden, daß eine vollständige Umsetzung der Siloxan-Einheiten (A) mit den mindestens eine Hydroxylgruppe aufweisenden Photoinitiatoren erfolgt. Des weiteren können als mindestens eine Hydroxylgruppe aufweisende Photoinitiatoren alle die in DE 2759766 (Merck Patent GmbH; ausgegeben am 14. April 1989) genannten Verbindungen eingesetzt werden.

Des weiteren können beispielsweise die erfindungsgemäßen Organo(poly)siloxanmassen Siloxan-Einheiten (A) aufweisende Organo(poly)siloxane, Siloxan-Einheiten (B) aufweisende Organo(poly)siloxane sowie gegebenenfalls Siloxan-Einheiten (C) aufweisende Organo(poly)siloxane enthalten.

Siloxan-Einheiten (A) aufweisende Organo(poly)siloxane und Verfahren zu deren Herstellung sind bereits aus der der internationalen Anmeldung mit dem Aktenzeichen PCT/EP91/00795 (Wacker-Chemie GmbH, angemeldet am 25. April 1991) sowie der deutschen Anmeldung mit dem Aktenzeichen P4114554.7 (Wacker-Chemie GmbH, angemeldet am 25. April 1991) bekannt.

Vorzugsweise handelt es sich bei den Siloxan-Einheiten (A) aufweisenden Organo(poly)siloxanen um solche der Formel 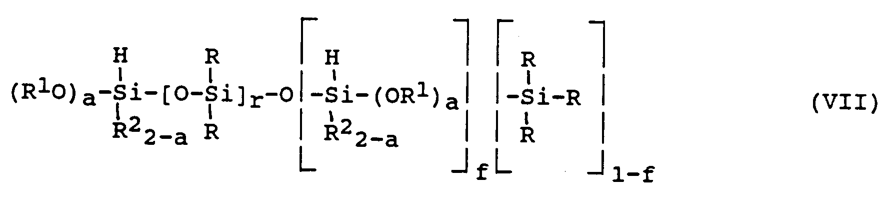
worin
R, R¹, R² und a unabhängig voneinander jeweils gleich oder verschieden sein können und eine der ober dafür angegebenen Bedeutungen haben,
- r: eine ganze Zahl von mindestens 2, bevorzugt zwischen 10 und 2500, besonders bevorzugt zwischen 10 und 1000, insbesondere zwischen 20 und 500, ist und
- f: 0 oder 1, bevorzugt 1, ist.

Obwohl durch Formel (VII) nicht dargestellt, können bis zu 50 Molprozent der Diorganosiloxaneinheiten durch andere Siloxaneinheiten, wie beispielsweise RSiO_{3/2}- und/oder SiO_{4/2}-Einheiten, ersetzt sein, wobei R die oben dafür angegebene Bedeutung hat. Des weiteren können die Organo(poly)siloxane gemäß Formel (VII) - obwohl ebenfalls nicht in Formel (VII) dargestellt - herstellungsbedingt bis zu 20 Molprozent andere funktionelle Gruppen, wie beispielsweise Hydroxylgruppen, enthalten.

Beispiele für die in den erfindungsgemäßen Organo(poly)siloxanmassen eingesetzten, Siloxan-Einheiten (A) aufweisenden Organo(poly)siloxane sind
α,ω-Bis(hydrogendimethoxysiloxy)dimethylpolysiloxane,
α,ω-Bis(hydrogendiethoxysiloxy)dimethylpolysiloxane,
α,ω-Bis(hydrogenmethoxymethylsiloxy)dimethylpolysiloxane,
1,1,3,3-Tetraethoxydisiloxan, (MeO)₂HSiO[SiMe₂O]ₙSiMe₃ und (EtO)₂HSiO[SiMe₂O]ₙSiMe₃, wobei Me Methylrest und Et Ethylrest bedeutet.

Bei den Siloxan-Einheiten (A) aufweisenden Organo(poly)siloxanen handelt es sich bevorzugt um α,ω-Bis(hydrogendialkoxysiloxy)dimethylpolysiloxane, deren Alkoxygruppen 1 bis 3 Kohlenstoffatom(e) aufweisen, wobei α,ω-Bis(hydrogendiethoxysiloxy)dimethylpolysiloxane besonders bevorzugt werden.

Die erfindungsgemäß eingesetzten, Siloxan-Einheiten (A) aufweisenden Organo(poly)siloxane besitzen bei einer Temperatur von 25°C eine Viskosität von vorzugsweise 1 bis 10⁶ mPa·s, besonders bevorzugt 30 bis 1·10⁵ mPa·s.

Als Siloxan-Einheiten (B) aufweisende Organo(poly)siloxane können alle Siloxane eingesetzt werden, die auch bisher in durch Bestrahlung vernetzbaren Massen auf Organo(poly)siloxanbasis eingesetzt wurden. Hierzu sei beispielsweise auf EP 157540 (Dow Corning Ltd.; ausgegeben am 9. Oktober 1985), EP 141380 (Dow Corning Corp.; ausgegeben am 18. April 1990), EP 336633 (Loctite Corp.; ausgegeben am 11. Oktober 1989), EP 299450 (Wacker-Chemie GmbH; ausgegeben am 18. Januar 1989), EP 283896 (Siemens AG, ausgegeben am 28. September 1988), EP 237757 (Wacker-Chemie GbmH; ausgegeben am 23. September 1987), DE 3433654 (Wacker-Chemie GmbH; ausgegeben am 20. März 1986), DE 2853766 (Dow Corning Corp.; ausgegeben am 5. Juni 1980), DE 2850611 (Dow Corning Corp.; ausgegeben am 7. Juni 1979), DE 3032626 (Shinetsu Chem Ind KK; ausgegeben am 19. März 1981), US 4,935,455 (Toshiba Silikone KK; ausgegeben am 19. Juni 1990), US 4,849,461 (Dow Corning Corp.; ausgegeben am 18. Juli 1989) und US 4,810,731 (Shinetsu Chem Ind KK; ausgegeben am 7. März 1989) verwiesen.

Die Herstellung der Siloxan-Einheiten (B) aufweisenden Organo(poly)siloxane kann nach in der Silicium-Chemie gängigen Methoden erfolgen, insbesondere durch Hydrolyse bzw. Cokondensation von Chlor-, Acyloxy- oder Alkoxysilanen vorzugsweise bei einem Druck von 900 bis 1100 hPa und einer Temperatur von 20 bis 180°C.

Die erfindungsgemäß eingesetzten, Siloxan-Einheiten (B) aufweisenden Organo(poly)siloxane besitzen bei einer Temperatur von 25 °C eine Viskosität von vorzugsweise 1 bis 10⁶ mPa·s, besonders bevorzugt 30 bis 1·10⁵ mPa·s.

Als Siloxan-Einheiten (C) aufweisende Organo(poly)siloxane werden vorzugsweise solche, die mindestens eine Einheit der Formel (V) enthalten, eingesetzt.

Ein weiterer Gegenstand der vorliegenden Erfindung sind Organo(poly)siloxane, die mindestens eine Einheit der Formel

(R⁷O)_{d}R⁸ₑHZ_{g}SiO_{(3-d-e-g)/2} (V)

enthalten, wobei
R⁷ und R⁸ unabhängig voneinander jeweils gleich oder verschieden sein können und einen einwertigen, gegebenenfalls substituierten Kohlenwasserstoffrest bedeuten,
- Z: gleich oder verschieden sein kann und eine durch Bestrahlung Radikale bildende Gruppe bedeutet,
- d: 0 oder 1, bevorzugt 1, ist,
- e: 0 oder 1, bevorzugt 0, ist und
- g: 1 oder 2, bevorzugt 1, ist,
mit der Maßgabe, daß in Formel (V) die Summe aus d, e und g kleiner oder gleich 2 ist.

Beispiele für die in den erfindungsgemäßen Organo(poly)siloxanmassen gegebenenfalls eingesetzten, erfindungsgemäßen Siloxan-Einheiten (C) aufweisenden Organo(poly)siloxane sind
[HSi(OMe)(OPI)O_{1/2}]₂[SiMe₂O_{2/2}]₈₄
OPI: 2-Methyl-1-phenyl-1-propanon-2-oxy-, [HSi(OPI)₂O_{1/2}]₂[SiMe₂O_{2/2}]₆₅
OPI: 2-Methyl-1-phenyl-1-propanon-2-oxy-,
[HSi(OPI)(OEt)O_{1/2}]₂[SiMe₂O_{2/2}]₆₅
OPI: 2-Methyl-1-phenyl-1-propanon-2-oxy,
[HSi(OPI)(OEt)O_{1/2}]₂[SiMe₂O_{2/2}]₇₂
OPI: (1-Oxycyclohexyl)phenylketon,
[HSi(OPI)(OEt)O_{1/2}]₂[SiMe₂O_{2/2}]₆₅
OPI: 2-Ethyl-1-phenyl-1-hexanon-2-oxy-,
[HSi(OPI)₂O_{1/2}]₁[HSi(OMe)(OPI)O_{1/2}]₁[SiMe₂O_{2/2}]₆₈
OPI: (1-Oxycyclohexyl)phenylketon,
[HSi(OPI)MeO_{1/2}]₂[SiMe₂O_{2/2}]₆₇
OPI: 2-Methyl-1-phenyl-1-propanon-2-oxy-,
[HSi(OMe)(OPI)O_{1/2}]₂[SiMe₂O_{2/2}]₁₁₅
OPI: 1-(3,4-Dimethylphenyl)-2-methyl-1-propanon-2-oxy-,
[HSi(OMe)(OPI)O_{1/2}]₂[SiMe₂O_{2/2}]₆₅
OPI: 2-Ethyl-1-(4-tolyl)-1-hexanon-2-oxy,
[HSi(OEt)(OPI)O_{1/2}]₄[SiMe₂O_{2/2}]₁₄₁[SiO_{4/2}]
OPI: 2-Ethyl-1-(4-methoxyphenyl)-1-hexanon-2-oxy-,
[HSi(OEt)(OPI)O_{1/2}]₂[SiMe₂O_{2/2}]₁₁
OPI: 1-(3,4-Dimethylphenyl)-2-methyl-1-propanon-2-oxy-,
[HSiPh(OPI)O_{1/2}]₂[SiMe₂O_{2/2}]₁₄₂[SiMePhO_{2/2}]₁₄
OPI: (1-Oxy-4-methyl-3-cyclohexen-1-yl)phenylketon,
[HSiPh(OPI)O_{1/2}]₂[SiMe₂O_{2/2}]₂₈[SiPh₂O_{2/2}]₄
OPI: 2-Methyl-1-phenyl-1-propanon-2-oxy-,
[HSiMe(OPI)O_{1/2}]₂[SiMe₂O_{2/2}]₃₄₄
OPI: 4-Methyl-5-phenyl-5-oxo-pentansäuremethylester-4-oxy-,
[HSi(OⁿPr)(OPI))O_{1/2}]₂[SiMe₂O_{2/2}]₁₅
OPI: 1-(4-Fluorphenyl)-2-methyl-1-propanon-2-oxy-,
HSi(OPI)(OEt)O_{1/2}]₂[SiMe₂O_{2/2}]₈₅
OPI: 1-(4-Methoxyphenyl)-2-methyl-1-propanon-2-oxy-,
[HSi(OPI)O_{2/2}][SiMe₂O_{2/2}]₆₅[HSi(OPI)(OMe)O_{1/2}]₂
OPI: 2-Methyl-1-phenyl-1-propanon-2-oxy-,
[HSi(OPI)₂O_{1/2}]₂[SiMeC₂H₄CF₃O_{2/2}]₂₇₄
OPI: 2-Methyl-1-(4-methoxyphenyl)-1-propanon-2-oxy-, und
[HSi(OPI)MeO_{1/2}]₂[SiMe₂O_{2/2}]₁₂₀[SiMePhO_{2/2}]₂₄
OPI: (1-Oxy-3,4-dimethyl-3-cyclohexen-1-yl)phenyl-keton,
wobei
[HSi(OMe)(OPI)O_{1/2}]₂[SiMe₂O_{2/2}]₈₄
OPI: 2-Methyl-1-phenyl-1-propanon-2-oxy-,
[HSi(OPI)₂O_{1/2}]₂[SiMe₂O_{2/2}]₆₅
OPI: 2-Methyl-1-phenyl-1-propanon-2-oxy-,
[HSi(OPI)(OEt)O_{1/2}]₂[SiMe₂O_{2/2}]₆₅
OPI: 2-Methyl-1-phenyl-1-propanon-2-oxy,
[HSi(OPI)(OEt)O_{1/2}]₂[SiMe₂O_{2/2}]₇₂
OPI: (1-Oxycyclohexyl)phenylketon,
[HSi(OPI)(OEt)O_{1/2}]₂[SiMe₂O_{2/2}]₆₅
OPI: 2-Ethyl-1-phenyl-1-hexanon-2-oxy-,
[HSi(OPI)₂O_{1/2}]₁[HSi(OMe)(OPI)O_{1/2}]₁[SiMe₂O_{2/2}]₆₈
OPI: (1-Oxycyclohexyl)phenylketon,
[HSi(OPI)MeO_{1/2}]₂[SiMe₂O_{2/2}]₆₇
OPI: 2-Methyl-1-phenyl-1-propanon-2-oxy-,
[HSi(OMe)(OPI)O_{1/2}]₂[SiMe₂O_{2/2}]₁₁₅
OPI: 1-(3,4-Dimethylphenyl)-2-methyl-1-propanon-2-oxy- und
[HSi(OMe)(OPI)O_{1/2}]₂[SiMe₂O_{2/2}]₆₅
OPI: 2-Ethyl-1-(4-tolyl)-1-hexanon-2-oxy
bevorzugt und
[HSi(OMe)(OPI)O_{1/2}]₂[SiMe₂O_{2/2}]₈₄
OPI: 2-Methyl-1-phenyl-1-propanon-2-oxy-,
[HSi(OPI)₂O_{1/2}]₂[SiMe₂O_{2/2}]₆₅
OPI: 2-Methyl-1-phenyl-1-propanon-2-oxy-,
[HSi(OPI)(OEt)O_{1/2}]₂[SiMe₂O_{2/2}]₆₅
OPI: 2-Methyl-1-phenyl-1-propanon-2-oxy,
[HSi(OPI)(OEt)O_{1/2}]₂[SiMe₂O_{2/2}]₇₂
OPI: (1-Oxycyclohexyl)phenylketon und
[HSi(OPI)(OEt)O_{1/2})₂[SiMe₂O_{2/2}]₆₅
OPI: 2-Ethyl-1-phenyl-1-hexanon-2-oxy-
besonders bevorzugt sind und Me Methylrest, Et Ethylrest, Pr Propylrest und Ph Phenylrest bedeutet.

Die erfindungsgemäßen, Siloxan-Einheiten (C) enthaltenden Organo(poly)siloxane können nach in der Silicium-Chemie gängigen Methoden hergestellt werden. Beispielsweise erfolgt ihre Herstellung durch Umsetzung von Siloxan-Einheiten (A) aufweisenden Siloxanen mit mindestens eine Hydroxylgruppe aufweisenden Photoinitiatoren, wie etwa 2-Hydroxy-2-methyl-1-phenylpropan, 1-Benzoylcyclohexan-1-ol und m-Hydroxybenzil, nach einer in W. Noll "Chemie und Technologie der Silicone", Verlag Chemie Weinheim, 2. Auflage, 1968, Seite 556 beschriebenen Verfahrensweise unter Entfernen des bei der Umsetzung entstehenden Alkohols durch Destillation bei dem Druck der umgebenden Atmosphäre oder erhöhtem Druck (bis 10⁵ hPa) oder erniedrigtem Druck (bis 10⁻⁶ hPa) und einer Temperatur von 20 bis 220°C, vorzugsweise bei einem Druck von 900 bis 1100 hPa und einer Temperatur von 30 bis 180°C. Die Stöchiometrie der Reaktionsteilnehmer muß dabei so gewählt werden, daß sämtliche Siloxan-Einheiten (A) umgesetzt werden. Als mindestens eine Hydroxylgruppe aufweisende Photoinitiatoren können des weiteren alle die in DE 2759766 (Merck Patent GmbH; ausgegeben am 14. April 1989) genannten Verbindungen eingesetzt werden.

Darüberhinaus können die mindestens eine Hydroxylgruppe aufweisenden Photoinitiatoren auch mit Trialkoxysilanen anstelle von Siloxan-Einheiten (A) aufweisenden Siloxanen unter den obengenannten Bedingungen umgesetzt werden.

Die gegebenenfalls eingesetzten, Siloxan-Einheiten (C) aufweisenden Organo(poly)siloxane besitzen bei einer Temperatur von 25 °C eine Viskosität von vorzugsweise 1 bis 10⁶ mPa·s, besonders bevorzugt 30 bis 1·10⁵ mPa·s.

Des weiteren können als Siloxan-Einheiten (C) aufweisende Organo(poly)siloxane alle Siloxane mit als Photoinitiator wirkenden Einheiten eingesetzt werden, die auch bisher in durch Bestrahlung vernetzbaren Massen auf Organo(poly)siloxanbasis eingesetzt wurden. Hierzu sei beispielsweise auf US 4,477,326 (Loctite Corp.; ausgegeben am 16. Oktober 1984), US 4,507,187 (Loctite Corp.; ausgegeben am 26. März 1985), EP 228,145 (Loctite Corp.; ausgegeben am 8. Juli 1987), US 4,273,907 (Shin-Etsu Chemical Co., Ltd.; ausgegeben am 16. Juni 1981) und US 4,534,838 (Loctite Corp.; ausgegeben am 13. August 1985) verwiesen.

In den erfindungsgemäßen Organo(poly)siloxanmassen können alle denkbaren Kombinationen von Organo(poly)siloxanen mit Siloxan-Einheiten (A) und/oder Siloxan-Einheiten (B) und/oder Siloxan-Einheiten (C) enthalten sein, mit der Maßgabe, daß in den erfindungsgemäßen Massen Siloxan-Einheiten (A), Siloxan-Einheiten (B) sowie gegebenenfalls Siloxan-Einheiten (C) vorhanden sind. Über die Anzahl der Siloxan-Einheiten (A) und/oder (B) pro Siloxanmolekül sowie die Konzentration dieser Siloxan-Einheiten in den erfindungsgemäßen Organo(poly)siloxanmassen läßt sich der gewünschte Vernetzungsgrad einstellen.

Bei den Siloxan-Einheiten (A), (B) und gegebenenfalls (C) der erfindungsgemäßen Organo(poly)siloxanmassen kann es sich jeweils um eine einzelne Art derartiger Siloxan-Einheiten wie auch um ein Gemisch aus jeweils verschiedenen Arten derartiger Siloxan-Einheiten handeln.

Bei der zur Vernetzung der erfindungsgemäßen Organo(poly)siloxan massen angewendeten energiereichen Strahlung handelt es sich vorzugsweise um Ultraviolettlicht. Es kann sich bei der energiereichen Strahlung aber auch z.B. um Röntgen-, Gamma- oder Elektronenstrahlen oder um gleichzeitige Anwendung von mindestens zwei verschiedenen Arten solcher Strahlen handeln.

Bei Elektronenstrahlen als energiereicher Strahlung sind 1 bis 4 M Rad ausreichend. Als Ultraviolettlicht ist solches mit Wellenlängen im Bereich von 200 bis 400 nm besonders bevorzugt.

Für die Feuchtigkeitsteilvernetzung, beispielsweise in Schattenbereichen, genügt die Anwesenheit von Luftfeuchtigkeit und Spuren von Brönsted-Säuren, wie beispielsweise Kohlensäure, die aus dem Kohlendioxid der Luft entsteht, oder Spaltprodukte von Photoinitiatoren, wie etwa Benzoesäure.

Die Vernetzung der erfindungsgemäßen Organo(poly)siloxanmassen bei Zutritt von Feuchtigkeit wie auch durch Bestrahlung findet vorzugsweise bei Temperaturen von 10 bis 150°C, besonders bevorzugt von 20 bis 80°C und einem Druck von bevorzugt 900 bis 1100 hPa statt.

Wenn es sich bei der zur Vernetzung der erfindungsgemäßen Organo(poly)siloxanmassen angewendeten Strahlung um Ultraviolettlicht handelt, so ist es bevorzugt, daß die erfindungsgemäßen Massen mindestens eine Siloxan-Einheit (C) und/oder mindestens einen Photoinitiator (D) aufweisen.

Bevorzugt als Photoinitiatoren (D) sind solche, die in Organo(poly)siloxanen löslich sind, wie z.B. 2-Hydroxy-2-methyl-1-phenylpropan-1-on und 2,4-Bis-(trimethylsiloxy)benzophenon.

Weitere Beispiele für geeignete Photoinitiatoren (D) sind Benzophenon und substituierte Benzophenone, Benzoin und substituierte Benzoine sowie Benzil und substituierte Benzile. Im einzelnen seien aufgeführt: Acetophenon, 2-Ethoxy-2-methylacetophenon, Trichlorbutylacetophenon, 2-Ethoxy-2-phenylacetophenon, Mesityloxid, Propiophenon, Benzophenon, Xanthon, Thioxanthon, Fluorenon, Benzaldehyd, Fluoren, Anthrachinon, Carbazol, 3-Methylacetophenon, 4-Methylacetophenon, 3-Bromacetophenon, 4-Methylbenzophenon, 4-Chlorbenzophenon, 4,4-Dimethoxybenzophenon, 4-Chlor-4'-benzylbenzophenon, 3-Chlorxanthon, 3,9-Dichlorxanthon, 3-Chlor-8-nonylxanthon, Chloranthrachinon, Benzoinmethylether, Benzil, Benzilketale und Hydroxybenzophenone und 2-Methyl-1-[4-(methylthio)phenyl]-2-morpholinopropan-1-on.

Falls solcher Photoinitiator (D) verwendet wird, wird er vorzugsweise in Mengen von 0,05 bis 10 Gew.-%, besonders bevorzugt 0,1 bis 3 Gew.-%, jeweils bezogen auf das Gesamtgewicht der erfindungsgemäßen Organo(poly)siloxanmassen, eingesetzt.

Die erfindungsgemäßen Organo(poly)siloxanmassen können zusätzlich zu Siloxan-Einheiten (A), Siloxan-Einheiten (B) sowie gegebenenfalls Siloxan-Einheiten (C) und/oder Photoinitiator (D) weitere Stoffe, wie Brönsted-Säuren, Organo(poly)siloxane, die weder Siloxan-Einheiten des Typs (A) noch des Typs (B) noch des Typs (C) aufweisen, Reaktiv-Verdünner, Lösungsmittel, Farbstoffe, Pigmente, Haftvermittler, Hitzestabilisatoren, Lichtstabilisatoren und Inhibitoren enthalten, mit der Maßgabe, daß diese zusätzlichen Stoffe die Lagerstabilität der erfindungsgemäßen Massen nicht herabsetzen, wie dies beispielsweise bei basisch wirkenden Substanzen der Fall ist.

Beispiele für Brönsted-Säuren, die die Feuchtigkeitsvernetzung der erfindungsgemäßen Organo(poly)siloxanmassen beschleunigen, sind Nonansäure, Isononansäure, 2-Ethylhexansäure, Ölsäure, Calcium-2-ethylhexanoat und Stearinsäure, wobei Ölsäure, 2-Ethylhexansäure und Calcium-2-ethylhexanoat bevorzugt und Ölsäure besonders bevorzugt eingesetzt werden.

Des weiteren können in den erfindungsgemäßen Organo(poly)siloxanmassen neben Brönsted-Säuren selbstverständlich auch alle anderen Kondensationskatalysatoren, die bisher in unter Ausschluß von Feuchtigkeit lagerfähigen, jedoch bei Zutritt von Feuchtigkeit vernetzbaren Organo(poly)siloxanmassen verwendet werden, eingesetzt werden, was aber nicht bevorzugt ist.

Beispiele für solche anderen Kondensationskatalysatoren sind Organozinnverbindungen, wie Dibutylzinndilaurat und Dibutylzinndiacetat, Organotitanverbindungen, Organozirkonverbindungen und Organoaluminiumverbindungen.

Vorzugsweise wird in den erfindungsgemäßen Organo(poly)siloxanmassen Kondensationskatalysator in Mengen von 0 bis 10 Gew.-%, besonders bevorzugt 50 ppm (parts per million) bis 3 Gew.-%, insbesondere 0,5 Gew.-%, jeweils bezogen auf das Gesamtgewicht der erfindungsgemäßen Organo(poly)siloxanmasse, eingesetzt.

Beispiele für Organo(poly)siloxane, die weder Siloxan-Einheiten des Typs (A) noch des Typs (B) noch des Typs (C) aufweisen, sind α,ω-(Trimethylsilyl)dimethylpolysiloxane mit einer Viskosität bei 25°C zwischen 5 und 10000 mPa·s, wobei α,ω-(Trimethylsilyl)dimethylpolysiloxane mit einer Viskosität zwischen 10 und 1000 mPa·s bevorzugt und solche mit einer Viskosität zwischen 10 und 100 mPa·s besonders bevorzugt eingesetzt werden.

Falls Organo(poly)siloxane, die weder Siloxan-Einheiten des Typs (A) noch des Typs (B) noch des Typs (C) aufweisen, verwendet werden, werden diese in Mengen von 0,1 bis 20 Gew.-%, besonders bevorzugt 1 bis 10 Gew.-%, jeweils bezogen auf das Gesamtgewicht der erfindungsgemäßen Organo(poly)siloxanmasse, eingesetzt.

Reaktiv-Verdünner sind Stoffe, die die Viskosität der erfindungsgemäßen Organo(poly)siloxanmasse reduzieren und die Härte des nach der Vernetzung der erfindungsgemäßen Masse entstandenen Vulkanisats erhöhen. Der Reaktiv-Verdünner sollte mit mindestens einem Organopolysiloxan der erfindungsgemäßen Masse mischbar sein und während des Vernetzungsprozesses so reagieren, daß er Bestandteil des durch Vernetzung der erfindungsgemäßen Masse entstehenden Vulkanisats wird.

Beispiele für Reaktiv-Verdünner sind Isobornylacrylat, Butandioldiacrylsäureester, Cyclohexylacrylat, 2-Ethylhexylacrylat, Glycerintriacrylat, Trialkoxysilane sowie deren Teilhydrolysate, Triacyloxysilane sowie deren Teilhydrolysate, alkoxyfunktionelle Siloxanharze mit einer Viskosität von 15 bis 2000 mPa·s, alkenylfunktionelle Silane sowie deren Teilhydrolysate, Pentaerythrittriacrylat, Pentaerythrittetraacrylat, Cyclododecatrien und Cohydrolysate von alkenylfunktionellen Silanen mit Alkoxysilanen, wobei Trialkoxysilane sowie deren Teilhydrolysate, Triacyloxysilane sowie deren Teilhydrolysate und alkoxyfunktionelle Siloxanharze mit einer Viskosität von 15 bis 2000 mPa·s bevorzugt und alkoxyfunktionelle Siloxanharze mit einer Viskosität von 15 bis 2000 mPa·s besonders bevorzugt eingesetzt werden.

Vorzugsweise wird in den erfindungsgemäßen Organo(poly)siloxanmassen Reaktiv-Verdünner in Mengen von 0 bis 30 Gew.-%, besonders bevorzugt 1 bis 20 Gew.-%, insbesondere 10 Gew.-%, jeweils bezogen auf das Gesamtgewicht der erfindungsgemäßen Organo(poly)siloxanmasse, eingesetzt.

Beispiele für Lösungsmittel sind Alkane, wie beispielsweise, Pentan, Isopentan, Hexan, Heptan und Isooctan, Aromaten, wie zum Beispiel Benzol, Toluol, Xylole und Mesitylen, halogenierte Kohlenwasserstoffe, wie beispielsweise Methylenchlorid, Chloroform und 1,2,3-Trichlorpropan, Carbonsäureester, wie beispielsweise Butylacetat und Ethylacetat, Ether, wie beispielsweise Diethylether, Tetrahydrofuran, Methyl(tert.)butylether und Dibutylether oder Gemische verschiedener Lösungsmittel, wobei Gemische aus Alkanen und Ethern bevorzugt sind, insbesondere ein Gemisch aus Heptan und Methyl(tert.)butylether.

Die Bezeichnung Lösungsmittel bedeutet nicht, daß sich alle übrigen Komponenten darin lösen müssen.

Bevorzugt wird Lösungsmittel in Mengen von 0 bis 50 Gew.-%, besonders bevorzugt 1 bis 30 Gew.-%, insbesondere 10 Gew.-%, jeweils bezogen auf das Gesamtgewicht der erfindungsgemäßen Organo(poly)siloxanmasse, eingesetzt.

Beispiele für Haftvermittler sind γ-Glycidoxypropyltriacetoxysilane und deren Teilhydrolysate, γ-Glycidoxypropyltrialkoxysilane und deren Teilhydrolysate, γ-glycidoxypropylfunktionelle Organo(poly)siloxane und carbonsäureanhydridfunktionelle Silane, wie beispielsweise 2-(1-Trialkoxysilyl-3-propyl)bernsteinsäureanhydride, sowie deren Teilhydrolysate.

Da die Haftung der aus den erfindungsgemäßen Organo(poly)siloxanmassen durch Vernetzung entstandenen Vulkanisate auf den Substraten, auf denen sie erzeugt wurden, im allgemeinen sehr gut ist, kann meist auf Haftvermittler verzichtet werden.

Wird jedoch Haftvermittler eingesetzt, so sind Mengen zwischen 0,1 und 5 Gew.-%, bezogen auf das Gesamtgewicht der erfindungsgemäßen Organo(poly)siloxanmasse bevorzugt.

Zur Bereitung der erfindungsgemäßen Organo(poly)siloxanmassen können alle Bestandteile der jeweiligen Masse in beliebiger Reihenfolge miteinander vermischt werden. Das Vermischen erfolgt vorzugsweise bei Raumtemperatur.

Werden die erfindungsgemäßen Organo(poly)siloxanmassen aus mehr als einer Komponente bereitet, so sollte bei denjenigen Komponenten, die Organo(poly)siloxane mit Siloxan-Einheiten (A) enthalten, eine Lagerung in Anwesenheit von Feuchtigkeit ausgeschlossen werden.

Diejenigen Komponenten, die Organo(poly)siloxane mit Siloxan-Einheiten (B) enthalten, sollten lichtgeschützt gelagert werden.

Bestehen die erfindungsgemäßen Organo(poly)siloxanmassen aus einer einzigen Komponente, so sollte eine Lagerung unter Ausschluß von Feuchtigkeit und Lichtstrahlen gewährleistet sein.

Die erfindungsgemäßen Organo(poly)siloxanmassen haben bei 25°C eine Viskosität von vorzugsweise 1 bis 1·10⁶ mPa·s, besonders bevorzugt 30 bis 1·10⁶ mPa·s.

Die erfindungsgemäßen Organo(poly)siloxanmassen können für alle Zwecke eingesetzt werden, für die auch bisher bei Zutritt von Feuchtigkeit und/oder durch Bestrahlung vernetzbare Massen eingesetzt werden, insbesondere zur Herstellung von Überzügen.

Beispiele für Substrate, auf denen die erfindungsgemäßen Organo(poly)siloxanmassen zur Herstellung von Überzügen aufgebracht werden können, sind keramische Gegenstände oder Glas, einschließlich Glasfasern, wozu wiederum Lichtleitfasern gehören, Papier, wie Kraftpapier oder Pergaminpapier, Pappen einschließlich solcher aus Asbest, Zellglas, Holz, Kork, Kunststoffolien, z.B. Polyethylenfolien oder Polypropylenfolien, gewebtes oder ungewebtes Tuch aus natürlichen Fasern oder synthetischen organischen Fasern oder Glasfasern, Metalle, wie Aluminiumfolien, mit Polyethylen beschichtetes Kraftpapier oder mit Polyethylen beschichtete Pappe. Soweit vorstehend Polyethylen genannt wurde, kann es sich dabei jeweils um Hoch-, Mittel- oder Niederdruck-Polyethylen handeln.

Das Auftragen der erfindungsgemäßen Organo(poly)siloxanmassen auf das zu überziehende Substrat kann in beliebiger, für die Herstellung von Überzügen aus flüssigen Stoffen geeigneter und vielfach bekannter Weise erfolgen, beispielsweise durch Tauchen, Streichen, Gießen, Sprühen, Aufwalzen, Messer- oder Rakelbeschichtung.

Die erfindungsgemäßen Organo(poly)siloxanmassen eignen sich ausgezeichnet zum Einbetten von elektrischen oder elektronischen Bauteilen.

Beispiele für elektronische Bauteile, die unter Verwendung der erfindungsgemäßen Organo(poly)siloxanmassen eingebettet werden können, sind Hybridschaltkreise, z.B. für elektronische Zündungen, Module, photovoltaische Solargeneratoren und andere Halbleiteranordnungen.

Vorzugsweise werden die erfindungsgemäßen Organo(poly)siloxanmassen bei ihrer Verwendung zur Herstellung von Überzügen oder zum Einbetten von elektrischen oder elektronischen Bauteilen durch Ultraviolettlicht vorvernetzt, wobei die Bestrahlungszeit vorzugsweise so gewählt wird, daß eine grifftrockene Oberfläche auf dem Vulkanisat entsteht. Die Nachvernetzung der bestrahlten Vulkanisatteile oder die Vernetzung in Schattenbereichen erfolgt dann durch Feuchtigkeitsvernetzung der in der erfindungsgemäßen Organo(poly)siloxanmasse enthaltenen Siloxan-Einheiten (A) vorzugsweise an Luft. Die Geschwindigkeit dieser Vernetzung ist um so größer, je höher der Anteil der Siloxan-Einheiten (A) in der erfindungsgemäßen Organo(poly)siloxanmasse ist, je höher die Konzentration des Kondensationskatalysators ist und je höher die relative Luftfeuchtigkeit ist.

Die erfindungsgemäßen Organo(poly)siloxanmassen haben den Vorteil, daß sie sehr schnell vernetzen. Insbesondere die Geschwindigkeit der Vernetzung bei Zutritt von Feuchtigkeit, die bereits durch Spuren von Brönsted-Säuren bzw. durch Zerfallsprodukte von Photoinitiatoren katalysiert wird, ist sehr hoch, so daß auf den Zusatz von in feuchtigkeitsvernetzenden Massen sonst üblichen metallhaltigen Kondensationskatalysatoren, die im allgemeinen die Lagerstabilität solcher Massen herabsetzen, verzichtet werden kann.

In den nachstehend beschriebenen Beispielen beziehen sich alle Angaben von Teilen und Prozentsätzen, falls nicht anders angegeben, auf das Gewicht. Sofern nicht anders angegeben, werden die nachstehenden Beispiele bei einem Druck der umgebenden Atmosphäre, also etwa bei 1000 hPa, und bei Raumtemperatur, also bei etwa 23°C, bzw. bei einer Temperatur, die sich beim Zusammengeben der Reaktanden bei Raumtemperatur ohne zusätzliche Heizung oder Kühlung einstellt, durchgeführt. Die relative Luftfeuchtigkeit liegt dabei, falls nichts anderes angegeben ist, zwischen 60 und 80 %.

Im Folgenden beziehen sich alle Viskositätsangaben auf eine Temperatur von 25°C.

### Beispiel 1

### a) Herstellung von Siloxan-Einheiten (A) aufweisendem Organopolysiloxan (Siloxan A1)

2590 g α,ω-Dihydroxydimethylpolysiloxan mit durchschnittlich 350 Dimethysiloxyeinheiten und einer Viskosität von etwa 1000 mPa, 65,6 g Hydrogentriethoxysilan und 13 g Pentandion werden unter Ausschluß von Feuchtigkeit gut vermischt, auf 100°C erwärmt, eine Stunde bei 100°C gerührt und durch kurzes Evakuieren (15 Minuten / 1 mbar) die flüchtigen Bestandteile entfernt. Anschließend wird über Cellulose filtriert. Es werden 2605 g eines klaren, farblosen Öles mit einer Viskosität von 1480 mPa·s erhalten, das nach ²⁹Si-NMR-Spektroskopie bezogen auf die Anzahl aller Endgruppen 91% H-Si-(OEt)₂-Endgruppen aufweist.

### b) Herstellung von Siloxan-Einheiten (B) aufweisendem Organopolysiloxan (Siloxan B1)

1036 g α,ω-Dihydroxydimethylpolysiloxan mit einer Viskosität von 20000 mPa·s, 70,5 g Vinyldimethylchlorsilan (0,5 mol), 21,7 g Trimethylchlorsilan (0,2 mol), 54 g Dimethoxymethyl(3-mercaptopropyl)silan (0,3 mol) und 0,1 g PNCl₂ werden 5 Stunden bei einer Temperatur von 80°C gerührt, mit 160 g Wasser versetzt und anschließend die flüchtigen Bestandteile abdestilliert. Als Produkt wird ein farbloses, klares Öl mit einer Viskosität von 580 mPa·s der mittleren Formel 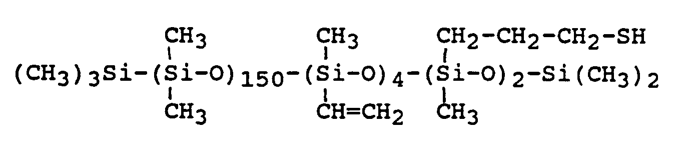
erhalten.

10 Teile des oben beschriebenen Siloxans (A1) werden mit einem Teil des oben beschriebenen Siloxans (B1) und 0,4 Teilen 2-Methyl-1-phenyl-propan-2-ol-1-on (käuflich erhältlich unter der Bezeichnung Darocure 1173 bei Merck, D-Darmstadt) gut vermischt. Die so erhaltene Mischung, welche ein klares, farbloses Öl mit einer Viskosität von 1200 mPa·s darstellt, wird mit einem Rakel auf eine Glasplatte aufgetragen, wobei die Schichtdicke circa 0,1 mm beträgt. Eine Probe des so beschichteten Substrats wird in Anwesenheit von Luft bestrahlt, wobei die Beschichtung nach 2 Sekunden Ultraviolettbestrahlung mit einer Leistung von 80 Watt/cm Leuchtlänge und Leistungsmaxima bei einer Wellenlänge von 313 nm und 361 nm in einem Abstand von 15 cm zu der zu vernetzenden Oberfläche (UV-Labortrockner Type 22/3 der Fa. Bentron GmbH, D-Rödermark) mit trockener Oberfläche aushärtet. Bei einer andere Probe des so beschichteten Substrats, die in Anwesenheit von Luft und Ausschluß von natürlichem Licht stehengelassen wird, beträgt die Hautbildungszeit zwei Stunden.

### Beispiel 2

### a) Herstellung von Siloxan-Einheiten (A) aufweisendem Organopolysiloxan (Siloxan A2)

2590 g α,ω-Dihydroxydimethylpolysiloxan mit durchschnittlich 70 Dimethysiloxyeinheiten und einer Viskosität von etwa 75 mPa·s, 328 g Hydrogentriethoxysilan und 15 g Pentandion werden unter Ausschluß von Feuchtigkeit gut vermischt, auf 100°C erwärmt, eine Stunde bei 100°C gerührt und durch kurzes Evakuieren (15 Minuten / 1 mbar) die flüchtigen Bestandteile entfernt. Anschließend wird über Cellulose filtriert. Es werden 2703 g eines klaren, farblosen Öles mit einer Viskosität von 120 mPa·s erhalten, das nach ²⁹Si-NMR-Spektroskopie bezogen auf die Anzahl aller Endgruppen 94 % H-Si-(OEt)₂-Endgruppen aufweist.

10 Teile des oben beschriebenen Siloxans (A2) werden mit zwei Teilen eines α,ω-
Bis(acryloxy-n-propyl)dimethylpolysiloxans mit durchschnittlich 13 Siloxan-Einheiten (käuflich erhältlich unter der Bezeichnung VP 1528 bei der Wacker-Chemie GmbH, D-8000 München) und 0,4 Teilen 2-Methyl-1-phenyl-propan-2-ol-1-on (käuflich erhältlich unter der Bezeichnung Darocure 1173 bei Merck, D- Darmstadt) gut vermischt. Die so erhaltene Mischung, welche ein klares, farbloses Öl mit einer Viskosität von 120 mPa·s darstellt, wird mit einem Rakel auf eine Glasplatte aufgetragen, wobei die Schichtdicke circa 0,1 mm beträgt. Eine Probe des so beschichteten Substrats wird in Anwesenheit von Luft bestrahlt, wobei die Beschichtung nach 30 Sekunden Ultraviolettbestrahlung mit einer Leistung von 80 Watt/cm Leuchtlänge und Leistungsmaxima bei einer Wellenlänge von 313 nm und 361 nm in einem Abstand von 15 cm zu der zu vernetzenden Oberfläche (UV-Labortrockner Type 22/3 der Fa. Bentron GmbH, D-Rödermark) mit trockener Oberfläche aushärtet. Bei einer andere Probe des so beschichteten Substrats, die in Anwesenheit von Luft und Ausschluß von natürlichem Licht stehengelassen wird, beträgt die Hautbildungszeit eine Stunde.

### Beispiel 3

### a) Herstellung von Siloxan-Einheiten (A) aufweisendem Organopolysiloxan (Siloxan A3)

962 g α,ω-Dihydroxydimethylpolysiloxan mit durchschnittlich 13 Dimethysiloxyeinheiten und einer Viskosität von etwa 10 mPa·s, 656 g Hydrogentriethoxysilan und 8,1 g Pentandion werden unter Ausschluß von Feuchtigkeit gut vermischt, auf 100°C erwärmt, eine Stunde bei 100°C gerührt und durch kurzes Evakuieren (15 Minuten / 1 mbar) die flüchtigen Bestandteile entfernt. Anschließend wird über Cellulose filtriert. Es werden 1086 g eines klaren, farblosen Öles mit einer Viskosität von 7 mPa·s erhalten, das nach ²⁹Si-NMR-Spektroskopie bezogen auf die Anzahl aller Endgruppen 92% H-Si-(OEt)₂-Endgruppen aufweist.

6 Teile des oben beschriebenen Siloxans (A3) werden mit drei Teilen eines α,ω-Bis(acryloxy-n-propyl)diorganopolysiloxans mit durchschnittlich 190 Siloxan-Einheiten, welches als Diorganosiloxygruppen neben Dimethylsiloxyeinheiten 4 Vinylmethyleinheiten und 2 HS(CH₂)₃SiCH₃O_{2/2}-Einheiten enthält, (käuflich erhältlich unter der Bezeichnung VP 1529 bei der Wacker-Chemie GmbH, D-8000 München) und 0,01 Teilen 2-Methyl-1-phenyl-propan-2-ol-1-on (käuflich erhältlich unter der Bezeichnung Darocure 1173 bei Merck, D-Darmstadt) gut vermischt. Die so erhaltene Mischung, welche ein klares, farbloses Öl mit einer Viskosität von 128 mPa·s darstellt, wird mit einem Rakel auf eine Glasplatte aufgetragen, wobei die Schichtdicke circa 0,1 mm beträgt. Eine Probe des so beschichteten Substrats wird in Anwesenheit von Luft bestrahlt, wobei die Beschichtung nach 10 Sekunden Ultraviolettbestrahlung mit einer Leistung von 80 Watt/cm Leuchtlänge und Leistungsmaxima bei einer Wellenlänge von 313 nm und 361 nm in einem Abstand von 15 cm zu der zu vernetzenden Oberfläche (UV-Labortrockner Type 22/3 der Fa. Bentron GmbH, D-Rödermark) mit trockener Oberfläche aushärtet. Bei einer anderen Probe des beschichteten Substrats, welches in Anwesenheit von Luft und Ausschluß von natürlichem Licht stehengelassen wird, beträgt die Hautbildungszeit 1,5 Stunden.

### Beispiel 4

5 Teile des in Beispiel 3 beschriebenen Siloxans (A3) werden mit drei Teilen eines α,ω-Bis(acryloxy-n-propyl)diorganopolysiloxans mit durchschnittlich 190 Siloxan-Einheiten, welches als Diorganosiloxygruppen neben Dimethylsiloxyeinheiten 4 Vinylmethyleinheiten und 2 HS(CH₂)₃SiCH₃O_{2/2}-Einheiten enthält, (käuflich erhältlich unter der Bezeichnung VP 1529 bei der Wacker-Chemie GmbH, D-8000 München), 1 Teil eines Ethoxygruppen haltigen Organopolysiloxanharzes mit einer Viskosität von 25 mPa·s und einem Verhältnis von R'₃SiO_{1/2}-Einheiten : R'₂SiO_{2/2}-Einheiten : R'SiO_{3/2}-Einheiten von 1:7:2, wobei R'gleich Methyl- oder Ethoxyrest ist (käuflich erhältlich unter der Bezeichnung "VP 7001" bei der Wacker-Chemie GmbH), 0,01 Teilen 2-Methyl-1-phenyl-propan-2-ol-1-on (käuflich erhältlich unter der Bezeichnung Darocure 1173 bei Merck, D-Darmstadt) und 0,01 Teilen 2-Ethylhexansäure gut vermischt. Die so erhaltene Mischung, welche ein klares, farbloses Öl mit einer Viskosität von 76 mPa·s darstellt, wird mit einem Rakel auf eine Glasplatte aufgetragen, wobei die Schichtdicke circa 0,1 mm beträgt. Eine Probe des so beschichteten Substrats wird in Anwesenheit von Luft bestrahlt, wobei die Beschichtung nach 10 Sekunden Ultraviolettbestrahlung mit einer Leistung von 80 Watt/cm Leuchtlänge und Leistungsmaxima bei einer Wellenlänge von 313 nm und 361 nm in einem Abstand von 15 cm zu der zu vernetzenden Oberfläche (UV-Labortrockner Type 22/3 der Fa. Bentron GmbH, D-Rödermark) mit trockener Oberfläche aushärtet. Bei einer anderen Probe des beschichteten Substrats, welches in Anwesenheit von Luft und Ausschluß von natürlichem Licht stehengelassen wird, beträgt die Hautbildungszeit eine Stunde.

### Beispiel 5

### a) Herstellung von Siloxan-Einheiten (A) und Siloxan-Einheiten (C) aufweisendem Organopolysiloxan (Siloxan AC1)

270 g des in Beispiel 3 beschriebenen Siloxans (A3) werden mit 36,5 g 2-Methyl-1-phenyl-propan-2-ol-1-on (käuflich erhältlich unter der Bezeichnung Darocure 1173 bei Merck, D-Darmstadt) und 2 g 2-Ethylhexansäure vermischt und 4 Stunden auf eine Temperatur von 120°C erhitzt, wobei der entstehende Alkohol abdestilliert wird. Es werden 292 g eines Umsetzungsproduktes erhalten, das nach ²⁹Si-NMR-Spektroskopie bezogen auf die Anzahl aller Endgruppen 47 % H-Si-(OEt)(OPI)-Endgruppen und 44 % H-Si-(OEt)₂-Endgruppen aufweist, wobei OPI für 2-Methyl-1-phenyl-1-propanon-2-oxy-steht.

0,05 Teile dieses oben beschriebenen Siloxans (AC1) werden mit 6 Teilen des in Beispiel 3 beschriebenen Siloxans (A3), 3 Teilen eines α,ω-Bis(acryloxy-n-propyl)diorganopolysiloxans mit durchschnittlich 190 Siloxan-Einheiten, welches als Diorganosiloxygruppen neben Dimethylsiloxyeinheiten 4 Vinylmethyleinheiten und 2 HS(CH₂)₃SiCH₃O_{2/2}-Einheiten enthält, (käuflich erhältlich unter der Bezeichnung VP 1529 bei der Wacker-Chemie GmbH, D-8000 München) und 1 Teil eines Ethoxygruppen haltigen Organopolysiloxanharzes mit einer Viskosität von 25 mPa·s und einem Verhältnis von R'₃SiO_{1/2}-Einheiten : R'₂SiO_{2/2}-Einheiten : R'SiO_{3/2}-Einheiten von 1:7:2, wobei R' gleich Methyl- oder Ethoxyrest ist (käuflich erhältlich unter der Bezeichnung "VP 7001" bei der Wacker-Chemie GmbH) gut vermischt. Die so erhaltene Mischung, welche ein klares, farbloses Öl mit einer Viskosität von 127 mPa·s darstellt, wird mit einem Rakel auf eine Glasplatte aufgetragen, wobei die Schichtdicke circa 0,1 mm beträgt. Eine Probe des so beschichteten Substrats wird in Anwesenheit von Luft bestrahlt, wobei die Beschichtung nach 20 Sekunden Ultraviolettbestrahlung mit einer Leistung von 80 Watt/cm Leuchtlänge und Leistungsmaxima bei einer Wellenlänge von 313 nm und 361 nm in einem Abstand von 15 cm zu der zu vernetzenden Oberfläche (UV-Labortrockner Type 22/3 der Fa. Bentron GmbH, D-Rödermark) mit trockener Oberfläche aushärtet. Bei einer anderen Probe des beschichteten Substrats, welches in Anwesenheit von Luft und Ausschluß von natürlichem Licht stehengelassen wird, beträgt die Hautbildungszeit 2,5 Stunden.

### Beispiel 6

### a) Herstellung von Siloxan-Einheiten (A) und Siloxan-Einheiten (B) aufweisendem Organopolysiloxan (Siloxan AB1)

2400 g α,ω-Dihydroxydiorganopolysiloxan, welches als Diorganosiloxyeinheiten durchschnittlich 60 Dimethylsiloxyeinheiten, 4 Vinylmethylsiloxyeinheiten und 2 HS(CH₂)₃SiCH₃O_{2/2}-Einheiten aufweist und eine Viskosität von etwa 100 mPa hat, 328 g Hydrogentriethoxysilan und 13,6 g Pentandion werden unter Ausschluß von Feuchtigkeit gut vermischt, auf 100°C erwärmt, eine Stunde bei 100°C gerührt und durch kurzes Evakuieren (15 Minuten / 1 mbar) die flüchtigen Bestandteile entfernt. Anschließend wird über Cellulose filtriert. Es werden 2513 g eines klaren, farblosen Öles mit einer Viskosität von 118 mPa·s erhalten, das nach ²⁹Si-NMR-Spektroskopie bezogen auf die Anzahl aller Endgruppen 93% H-Si-(OEt)₂-Endgruppen aufweist.

100 Teile des oben beschriebenen Siloxans (AB1) werden mit 1 Teil Ölsäure und 0,2 Teilen 2-Methyl-1-phenyl-propan-2-ol-1-on (käuflich erhältlich unter der Bezeichnung Darocure 1173 bei Merck, D-Darmstadt) gut vermischt. Die so erhaltene Mischung, welche ein klares, farbloses Öl mit einer Viskosität von 116 mPa·s darstellt, wird mit einem Rakel auf eine Glasplatte aufgetragen, wobei die Schichtdicke circa 0,1 mm beträgt. Eine Probe des so beschichteten Substrats wird in Anwesenheit von Luft bestrahlt, wobei die Beschichtung nach 10 Sekunden Ultraviolettbestrahlung mit einer Leistung von 80 Watt/cm Leuchtlänge und Leistungsmaxima bei einer Wellenlänge von 313 nm und 361 nm in einem Abstand von 15 cm zu der zu vernetzenden Oberfläche (UV-Labortrockner Type 22/3 der Fa. Bentron GmbH, D-Rödermark) mit trockener Oberfläche aushärtet. Bei einer anderen Probe des beschichteten Substrats, welches in Anwesenheit von Luft und Ausschluß von natürlichem Licht stehengelassen wird, beträgt die Hautbildungszeit 30 Minuten.

### Beispiel 7

### a) Herstellung von Siloxan-Einheiten (A), Siloxan-Einheiten (B) und Siloxan-Einheiten (C) aufweisendem Organopolysiloxan (Siloxan ABC1)

Eine Mischung aus 100 g des in Beispiel 6 beschriebenen Siloxans (AB1) mit 3,85 g 1-Hydroxycyclohexylphenylketon (käuflich erhältlich unter der Bezeichnung Irgacure 184 bei Ciba-Geigy, CH-Basel) und 0,5 g 2-Ethylhexansäure wird eine Stunde unter Abdestillieren des freiwerdenden Ethanols bei 120°C/1 mbar am Rotationsverdampfer erhitzt. Es werden 102 g eines klaren, farblosen Öles mit einer Viskosität von 144 mPa·s erhalten, das nach ²⁹Si-NMR-Spektroskopie bezogen auf die Anzahl aller Endgruppen 44 % H-Si-(OEt)₂-Endgruppen, 40 % H-Si-(OEt)(OPI)-Endgruppen und 7 % H-Si-(OPI)₂-Endgruppen aufweist, wobei OPI für (1-Oxycyclohexyl)phenylketon steht.

### b) Vernetzungstest mit Siloxan ABC1

100 Teile des oben beschriebenen Siloxans (ABC1) werden mit 0,1 Teilen Essigsäureanhydrid gut vermischt. Die so erhaltene Mischung, welche ein klares, farbloses Öl mit einer Viskosität von 144 mPa·s darstellt, wird mit einem Rakel auf eine Aluminiumplatte aufgetragen, wobei die Schichtdicke circa 0,1 mm beträgt. Eine Probe des so beschichteten Substrats wird in Anwesenheit von Luft bestrahlt, wobei die Beschichtung nach 2 Sekunden Ultraviolettbestrahlung mit einer Leistung von 80 Watt/cm Leuchtlänge und Leistungsmaxima bei einer Wellenlänge von 313 nm und 361 nm in einem Abstand von 15 cm zu der zu vernetzenden Oberfläche (UV-Labortrockner Type 22/3 der Fa. Bentron GmbH, D-Rödermark) mit trockener Oberfläche aushärtet. Bei einer anderen Probe des so beschichteten Substrats, welches in Anwesenheit von Luft und Ausschluß von natürlichem Licht stehengelassen wird, beträgt die Hautbildungszeit 90 Minuten. In beiden Fällen läßt sich das Vulkanisat nur unter Zerstörung vom Substrat ablösen.

### Beispiel 8

### a) Herstellung von Siloxan-Einheiten (C) aufweisendem Organopolysiloxan (Siloxan C1)

Eine Mischung aus 100 g des in Beispiel 2 beschriebenen Siloxans (A2) mit 7 g 2-Methyl-1-phenyl-propan-2-ol-1-on (käuflich erhältlich unter der Bezeichnung Darocure 1173 bei Merck, D-Darmstadt) und 0,5 g 2-Ethylhexansäure wird eine Stunde unter Abdestillieren des freiwerdenden Ethanols bei 120°C/1 mbar am Rotationsverdampfer erhitzt. Es werden 103 g eines klaren, farblosen Öles mit einer Viskosität von 84 mPa·s erhalten, das nach ²⁹Si-NMR-Spektroskopie bezogen auf die Anzahl aller Endgruppen 86 % H-Si-(OEt)(OPI)-Endgruppen und 8 % H-Si-(OPI)₂-Endgruppen aufweist, wobei OPI für 2-Methyl-1-phenyl-1-propanon-2-oxy- steht.

### b) Vernetzungstest mit Siloxan C1

5 Teile des oben beschriebenen Siloxans C1 werden mit 50 Teilen des in Beispiel 6 beschriebenen Siloxans (AB1) und 0,05 Teilen Ölsäure gut vermischt. Die so erhaltene Mischung, welche ein klares, farbloses Öl mit einer Viskosität von 116 mPa·s darstellt, wird mit einem Rakel auf eine Glasplatte aufgetragen, wobei die Schichtdicke circa 0,1 mm beträgt. Eine Probe des so beschichteten Substrats wird in Anwesenheit von Luft bestrahlt, wobei die Beschichtung nach 5 Sekunden Ultraviolettbestrahlung mit einer Leistung von 80 Watt/cm Leuchtlänge und Leistungsmaxima bei einer Wellenlänge von 313 nm und 361 nm in einem Abstand von 15 cm zu der zu vernetzenden Oberfläche (UV-Labortrockner Type 22/3 der Fa. Bentron GmbH, D-Rödermark) mit trockener Oberfläche aushärtet. Bei einer anderen Probe des so beschichteten Substrats, die in Anwesenheit von Luft und Ausschluß von natürlichem Licht stehengelassen wird, beträgt die Hautbildungszeit vier Stunden.

### Beispiel 9

### a) Herstellung von Siloxan-Einheiten (B) und Siloxan-Einheiten (C) aufweisendem Siloxan (BC1)

Eine Mischung aus 100 g des in Beispiel 6 beschriebenen Siloxans (AB1) mit 9 g 2-Methyl-1-phenyl-propan-2-ol-1-on (käuflich erhältlich unter der Bezeichnung Darocure 1173 bei Merck, D-Darmstadt) und 1 g Ölsäure wird eine Stunde unter Abdestillieren des freiwerdenden Ethanols bei 120°C/1 mbar am Rotationsverdampfer erhitzt. Es werden 108 g eines klaren, farblosen Öles mit einer Viskosität von 158 mPa·s erhalten, das nach ²⁹Si-NMR-Spektroskopie bezogen auf die Anzahl aller Endgruppen 61 % H-Si-(OEt)(OPI)-Endgruppen und 30 % H-Si-(OPI)₂-Endgruppen aufweist, wobei OPI für 2-Methyl-1-phenyl-1-propanon-2-oxy- steht.

### b) Vernetzungstest mit Siloxan BC1

50 Teile des oben beschriebenen Siloxans (BC1) werden mit 50 Teilen des in Beispiel 2 beschriebenen Siloxans (A2) gut vermischt. Die so erhaltene Mischung, welche ein klares, farbloses Öl mit einer Viskosität von 145 mPa·s darstellt, wird mit einem Rakel auf eine Aluminiumplatte aufgetragen, wobei die Schichtdicke circa 0,1 mm beträgt. Eine Probe des so beschichteten Substrats wird in Anwesenheit von Luft bestrahlt, wobei die Beschichtung nach 2 Sekunden Ultraviolettbestrahlung mit einer Leistung von 80 Watt/cm Leuchtlänge und Leistungsmaxima bei einer Wellenlänge von 313 nm und 361 nm in einem Abstand von 15 cm zu der zu vernetzenden Oberfläche (UV-Labortrockner Type 22/3 der Fa. Bentron GmbH, D-Rödermark) mit trockener Oberfläche aushärtet. Bei einer anderen Probe des so beschichteten Substrats, welches in Anwesenheit von Luft und Ausschluß von natürlichem Licht stehengelassen wird, beträgt die Hautbildungszeit sechs Stunden.

## Patentansprüche

1. Organo(poly)siloxanmassen, die
(A) Einheiten der Formel
(R¹O)ₐSiHR²₂₋ₐO_{1/2} (I),
worin
R¹ und R² unabhängig voneinander jeweils gleich oder verschieden sein können und einen einwertigen, gegebenenfalls substituierten Kohlenwasserstoffrest mit 1 bis 13 Kohlenstoffatom(en) bedeuten und
a 1 oder 2 ist,
(B) durch Bestrahlung vernetzbare Siloxan-Einheiten der Formel
GₕSiR³_{b}O_{(4-b-h)/2} (II)
und/oder
R⁵_{c}SiR⁴ᵢO_{(4-c-i)/2} (III),
worin
G gleich oder verschieden sein kann und einen linearen oder cyclischen Thioalkylrest mit 1 bis 13 Kohlenstoffatom(en) bedeutet,
R³ gleich oder verschieden sein kann und einen einwertigen gegebenenfalls substituierten Kohlenwasserstoffrest mit 1 bis 13 Kohlenstoffatom(en) bedeutet,
b 0, 1 oder 2 ist,
h 1, 2 oder 3 ist,
R⁴ einen einwertigen, mindestens eine aliphatische Kohlenstoff-Kohlenstoff-Mehrfachbindung aufweisenden Rest mit 2 bis 18 Kohlenstoffatomen bedeutet,
R⁵ gleich oder verschieden sein kann und einen einwertigen, gegebenenfalls substituierten Kohlenwasserstoffrest mit 1 bis 13 Kohlenstoffatom(en) bedeutet,
c 0, 1 oder 2 ist und
i 1, 2 oder 3 ist,
mit der Maßgabe, daß die Summe aus b+h und die Summe aus c+i jeweils kleiner oder gleich 3 ist,
sowie gegebenenfalls
(C) als Photoinitiator wirkende Siloxan-Einheiten der Formel
(R⁷O)_{d}R⁸ₑHZ_{g}SiO_{(3-d-e-g)/2} (V),
wobei
R⁷ gleich oder verschieden sein kann und einen einwertigen, gegebenenfalls substituierten Kohlenwasserstoffrest mit 1 bis 13 Kohlenstoffatom(en) bedeutet,
R⁸ gleich oder verschieden sein kann und einen einwertigen, gegebenenfalls substituierten Kohlenwasserstoffrest mit 1 bis 13 Kohlenstoffatom(en) bedeutet,
Z gleich oder verschieden sein kann und eine durch Bestrahlung Radikale bildende Gruppe bedeutet,
d 0 oder 1 ist,
e 0 oder 1 ist und
g 1 oder 2 ist,
mit der Maßgabe, daß in Formel (V) die Summe aus d, e und g kleiner oder gleich 2 ist,
enthalten.

2. Organo(poly)siloxanmassen nach Anspruch 1, dadurch gekennzeichnet, daß sie Einheiten der allgemeinen Formel
RₖSiO_{(4-k)/2} (VI),
enthalten, worin
R gleich oder verschieden sein kann und einen einwertigen, gegebenenfalls substituierten Kohlenwasserstoffrest mit 1 bis 13 Kohlenstoffatom(en) bedeutet und
k 0, 1, 2 oder 3 ist.

3. Organo(poly)siloxane, die
(A) Einheiten der Formel
(R¹O)ₐSiHR²₂₋ₐO_{1/2} (I),
worin
R¹ und R² unabhängig voneinander jeweils gleich oder verschieden sein können und einen einwertigen, gegebenenfalls substituierten Kohlenwasserstoffrest mit 1 bis 13 Kohlenstoffatom(en) bedeuten und
a 1 oder 2 ist,
und
(B) durch Bestrahlung vernetzbare Siloxan-Einheiten der Formel
GₕSiR³_{b}O_{(4-b-h)/2} (II)
und/oder
R⁵_{c}SiR⁴ᵢO_{(4-c-i)/2} (III),
worin
G gleich oder verschieden sein kann und einen linearen oder cyclischen Thioalkylrest mit 1 bis 13 Kohlenstoffatom(en) bedeutet,
R³ gleich oder verschieden sein kann und einen einwertigen gegebenenfalls substituierten Kohlenwasserstoffrest mit 1 bis 13 Kohlenstoffatom(en) bedeutet,
b 0, 1 oder 2 ist,
h 1, 2 oder 3 ist,
R⁴ einen einwertigen, mindestens eine aliphatische Kohlenstoff-Kohlenstoff-Mehrfachbindung aufweisenden Rest mit 2 bis 18 Kohlenstoffatomen bedeutet,
R⁵ gleich oder verschieden sein kann und einen einwertigen, gegebenenfalls substituierten Kohlenwasserstoffrest mit 1 bis 13 Kohlenstoffatom(en) bedeutet,
c 0, 1 oder 2 ist und
i 1, 2 oder 3 ist,
mit der Maßgabe, daß die Summe aus b+h und die Summe aus c+i jeweils kleiner oder gleich 3 ist, enthalten.

4. Organo(poly)siloxane, die
(A) Einheiten der Formel
(R¹O)ₐSiHR²₂₋ₐO_{1/2} (I),
worin
R¹ und R² unabhängig voneinander jeweils gleich oder verschieden sein können und einen einwertigen, gegebenenfalls substituierten Kohlenwasserstoffrest mit 1 bis 13 Kohlenstoffatom(en) bedeuten und
a 1 oder 2 ist,
(B) durch Bestrahlung vernetzbare Siloxan-Einheiten der Formel
GₕSiR³_{b}O_{(4-b-h)/2} (II)
und/oder
R⁵_{c}SiR⁴ᵢO_{(4-c-i)/2} (III),
worin
G gleich oder verschieden sein kann und einen linearen oder cyclischen Thioalkylrest mit 1 bis 13 Kohlenstoffatom(en) bedeutet,
R³ gleich oder verschieden sein kann und einen einwertigen gegebenenfalls substituierten Kohlenwasserstoffrest mit 1 bis 13 Kohlenstoffatom(en) bedeutet,
b 0, 1 oder 2 ist,
h 1, 2 oder 3 ist,
R⁴ einen einwertigen, mindestens eine aliphatische Kohlenstoff-Kohlenstoff-Mehrfachbindung aufweisenden Rest mit 2 bis 18 Kohlenstoffatomen bedeutet,
R⁵ gleich oder verschieden sein kann und einen einwertigen, gegebenenfalls substituierten Kohlenwasserstoffrest mit 1 bis 13 Kohlenstoffatom(en) bedeutet,
c 0, 1 oder 2 ist und
i 1, 2 oder 3 ist,
mit der Maßgabe, daß die Summe aus b+h und die Summe aus c+i jeweils kleiner oder gleich 3 ist, sowie
(C) als Photoinitiator wirkende Siloxan-Einheiten der Formel
(R⁷O)_{d}R⁸ₑHZ_{g}SiO_{(3-d-e-g)/2} (V),
wobei
R⁷ gleich oder verschieden sein kann und einen einwertigen, gegebenenfalls substituierten Kohlenwasserstoffrest mit 1 bis 13 Kohlenstoffatom(en) bedeutet,
R⁸ gleich oder verschieden sein kann und einen einwertigen, gegebenenfalls substituierten Kohlenwasserstoffrest mit 1 bis 13 Kohlenstoffatom(en) bedeutet,
Z gleich oder verschieden sein kann und eine durch Bestrahlung Radikale bildende Gruppe bedeutet,
d 0 oder 1 ist,
e 0 oder 1 ist und
g 1 oder 2 ist,
mit der Maßgabe, daß in Formel (V) die Summe aus d, e und g kleiner oder gleich 2 ist, enthalten.

5. Organo(poly)siloxane, die
(A) Einheiten der Formel
(R¹O)ₐSiHR²₂₋ₐO_{1/2} (I),
worin
R¹ und R² unabhängig voneinander jeweils gleich oder verschieden sein können und einen einwertigen, gegebenenfalls substituierten Kohlenwasserstoffrest mit 1 bis 13 Kohlenstoffatom(en) bedeuten und
a 1 oder 2 ist,
und
(C) als Photoinitiator wirkende Siloxan-Einheiten der Formel
(R⁷O)_{d}R⁸ₑHZ_{g}SiO_{(3-d-e-g)/2} (V),
wobei
R⁷ gleich oder verschieden sein kann und einen einwertigen, gegebenenfalls substituierten Kohlenwasserstoffrest mit 1 bis 13 Kohlenstoffatom(en) bedeutet,
R⁸ gleich oder verschieden sein kann und einen einwertigen, gegebenenfalls substituierten Kohlenwasserstoffrest mit 1 bis 13 Kohlenstoffatom(en) bedeutet,
Z gleich oder verschieden sein kann und eine durch Bestrahlung Radikale bildende Gruppe bedeutet,
d 0 oder 1 ist,
e 0 oder 1 ist und
g 1 oder 2 ist,
mit der Maßgabe, daß in Formel (V) die Summe aus d, e und g kleiner oder gleich 2 ist,
enthalten.

6. Organo(poly)siloxane, die mindestens eine Einheit der Formel
(R⁷O)_{d}R⁸ₑHZ_{g}SiO_{(3-d-e-g)/2} (V)
enthalten, wobei
R⁷ und R⁸ unabhängig voneinander jeweils gleich oder verschieden sein können und einen einwertigen, gegebenenfalls substituierten Kohlenwasserstoffrest mit 1 bis 13 Kohlenstoffatom(en) bedeuten,
Z gleich oder verschieden sein kann und eine durch Bestrahlung Radikale bildende Gruppe bedeutet,
d 0 oder 1 ist,
e 0 oder 1 ist und
g 1 oder 2 ist,
mit der Maßgabe, daß in Formel (V) die Summe aus d, e und g kleiner oder gleich 2 ist.

7. Verwendung der Organo(poly)siloxanmassen gemäß Anspruch 1 zur Herstellung von Überzügen.

## Claims

1. Organo(poly)siloxane compositions which comprise
(A) units of the formula
(R¹O)ₐSiHR²₂₋ₐO_{1/2} (I)
wherein
R¹ and R² independently of one another can in each case be identical or different and denote a monovalent, optionally substituted hydrocarbon radical having 1 to 13 carbon atom(s) and
a is 1 or 2,
(B) siloxane units which can be crosslinked by irradiation of the formula
GₕSiR³_{b}O_{(4-b-h)/2} (II)
and/or
R⁵_{c}SiR⁴ᵢO_{(4-c-i)/2} (III)
wherein
G can be identical or different and denotes a linear or cyclic thioalkyl radical having 1 to 13 carbon atom(s),
R³ can be identical or different and denotes a monovalent, optionally substituted hydrocarbon radical having 1 to 13 carbon atom(s),
b is 0, 1 or 2,
h is 1, 2 or 3,
R⁴ is a monovalent radical having at least one aliphatic carbon-carbon multiple bond and having 2 to 18 carbon atoms,
R⁵ can be identical or different and denotes a monovalent, optionally substituted hydrocarbon radical having 1 to 13 carbon atom(s),
c is 0, 1 or 2 and
i is 1, 2 or 3,
with the proviso that the sum of b+h and the sum of c+i is in each case less than or equal to 3,
and if appropriate
(C) siloxane units which act as a photoinitiator of the formula
(R⁷O)_{d}R⁸ₑHZ_{g}SiO_{(3-d-e-g)/2} (V)
wherein
R⁷ can be identical or different and denotes a monovalent, optionally substituted hydrocarbon radical having 1 to 13 carbon atom(s),
R⁸ can be identical or different and denotes a monovalent, optionally substituted hydrocarbon radical having 1 to 13 carbon atom(s),
Z can be identical or different and denotes a group which forms free radicals by irradiation,
d is 0 or 1,
e is 0 or 1 and
g is 1 or 2,
with the proviso that in formula (V) the sum of d, e and g is less than or equal to 2.

2. Organo(poly)siloxane compositions according to Claim 1, characterised in that they comprise units of the general formula
RₖSiO_{(4-k)/2} (VI)
wherein
R can be identical or different and denotes a monovalent, optionally substituted hydrocarbon radical having 1 to 13 carbon atom(s) and
k is 0, 1, 2 or 3.

3. Organo(poly)siloxanes which comprise
(A) units of the formula
(R¹O)ₐSiHR²₂₋ₐO_{1/2} (I)
wherein
R¹ and R² independently of one another can in each case be identical or different and denote a monovalent, optionally substituted hydrocarbon radical having 1 to 13 carbon atom(s) and
a is 1 or 2,
and
(B) siloxane units which can be crosslinked by irradiation of the formula
GₕSiR³_{b}O_{(4-b-h)/2} (II)
and/or
R⁵_{c}SiR⁴ᵢO_{(4-c-i)/2} (III)
wherein
G can be identical or different and denotes a linear or cyclic thioalkyl radical having 1 to 13 carbon atom(s),
R³ can be identical or different and denotes a monovalent, optionally substituted hydrocarbon radical having 1 to 13 carbon atom(s),
b is 0, 1 or 2,
h is 1, 2 or 3,
R⁴ is a monovalent radical having at least one aliphatic carbon-carbon multiple bond and having 2 to 18 carbon atoms,
R⁵ can be identical or different and denotes a monovalent, optionally substituted hydrocarbon radical having 1 to 13 carbon atom(s),
c is 0, 1 or 2 and
i is 1, 2 or 3,
with the proviso that the sum of b+h and the sum of c+i is in each case less than or equal to 3.

4. Organo(poly)siloxanes which comprise
(A) units of the formula
(R¹O)ₐSiHR²₂₋ₐO_{1/2} (I)
wherein
R¹ and R² independently of one another can in each case be identical or different and denote a monovalent, optionally substituted hydrocarbon radical having 1 to 13 carbon atom(s) and
a is 1 or 2,
(B) siloxane units which can be crosslinked by irradiation of the formula
GₕSiR³_{b}O_{(4-b-h)/2} (II)
and/or
R⁵_{c}SiR⁴ᵢO_{(4-c-i)/2} (III)
wherein
G can be identical or different and denotes a linear or cyclic thioalkyl radical having 1 to 13 carbon atom(s),
R³ can be identical or different and denotes a monovalent, optionally substituted hydrocarbon radical having 1 to 13 carbon atom(s),
b is 0, 1 or 2,
h is 1, 2 or 3,
R⁴ is a monovalent radical having at least one aliphatic carbon-carbon multiple bond and having 2 to 18 carbon atoms,
R⁵ can be identical or different and denotes a monovalent, optionally subsituted hydrocarbon radical having 1 to 13 carbon atom(s),
c is 0, 1 or 2 and
i is 1, 2 or 3,
with the proviso that the sum of b+h and the sum of c+i is in each case less than or equal to 3, and
(C) siloxane units which act as a photoinitiator of the formula
(R⁷O)_{d}R⁸ₑHZ_{g}SiO_{(3-d-e-g)/2} (V)
wherein
R⁷ can be identical or different and denotes a monovalent, optionally subsituted hydrocarbon radical having 1 to 13 carbon atom(s),
R⁸ can be identical or different and denotes a monovalent, optionally substituted hydrocarbon radical having 1 to 13 carbon atom(s),
Z can be identical or different and denotes a group which forms free radicals by irradiation,
d is 0 or 1,
e is 0 or 1 and
g is 1 or 2,
with the proviso that in formula (V) the sum of d, e and g is less than or equal to 2.

5. Organo(poly)siloxanes which comprise
(A) units of the formula
(R¹O)ₐSiHR²₂₋ₐO_{1/2} (I)
wherein
R¹ and R² independently of one another can in each case be identical or different and denote a monovalent, optionally substituted hydrocarbon radical having 1 to 13 carbon atom(s) and
a is 1 or 2,
and
(C) siloxane units which act as a photoinitiator of the formula
(R⁷O)_{d}R⁸ₑHZ_{g}SiO_{(3-d-e-g)/2} (V)
wherein
R⁷ can be identical or different and denotes a monovalent, optionally substituted hydrocarbon radical having 1 to 13 carbon atom(s),
R⁸ can be identical or different and denotes a monovalent, optionally substituted hydrocarbon radical having 1 to 13 carbon atom(s),
Z can be identical or different and denotes a group which forms free radicals by irradiation,
d is 0 or 1,
e is 0 or 1 and
g is 1 or 2,
with the proviso that in formula (V) the sum of d, e and g is less than or equal to 2.

6. Organo(poly)siloxanes which comprise at least one unit of the formula
(R⁷O)_{d}R⁸ₑHZ_{g}SiO_{(3-d-e-g)/2} (V)
wherein
R⁷ and R⁸ independently of one another can in each case be identical or different and denote a monovalent, optionally substituted hydrocarbon radical having 1 to 13 carbon atoms(s),
Z can be identical or different and denotes a group which forms free radicals by irradiation,
d is 0 or 1,
e is 0 or 1 and
g is 1 or 2,
with the proviso that in formula (V) the sum of d, e and g is less than or equal to 2.

7. Use of the organo(poly)siloxane compositions according to Claim 1 for the producation of coatings.

## Revendications

1. Compositions d'organo(poly)siloxanes, qui contiennent
(A) des unités de formule
(R¹O)ₐSiHR²₂₋ₐO_{1/2} (I),
dans laquelle
les R¹ et R² peuvent être, indépendamment les uns des autres, identiques ou différents, et représentent des restes hydrocarbonés monovalents éventuellement substitués de 1 à 13 atomes de carbone, et
a est 1 ou 2,
(B) des unités siloxane réticulables par exposition à un rayonnement, de formule
GₕSiR³_{b}O_{(4-b-h)/2} (II)
et/ou
R⁵_{c}SiR⁴ᵢO_{(4-c-i)/2} (III),
dans lesquelles
les G peuvent être identiques ou différents et représentent des restes thioalkyle linéaires ou cycliques de 1 à 13 atomes de carbone,
les R³ peuvent être identiques ou différents et représentent des restes hydrocarbonés monovalents éventuellement substitués de 1 à 13 atomes de carbone,
b est 0, 1 ou 2,
h est 1, 2 ou 3,
R⁴ représente un reste monovalent de 2 à 18 atomes de carbone contenant au moins une liaison multiple carbone-carbone aliphatique,
les R⁵ peuvent être identiques ou différents et représentent des restes hydrocarbonés monovalents éventuellement substitués de 1 à 13 atomes de carbone,
c est 0, 1 ou 2, et
i est 1, 2 ou 3,
sous réserve que la somme b+h et la somme c+i soient toujours inférieures ou égales à 3,
et éventuellement
(C) des unités siloxane ayant une activité de photoamorceurs de formule
(R⁷O)_{d}R⁸ₑHZ_{g}SiO_{(3-d-e-g)/2} (V)
dans laquelle
les R⁷ peuvent être identiques ou différents et représentent des restes hydrocarbonés monovalents éventuellement substitués de 1 à 13 atomes de carbone,
les R⁸ peuvent être identiques ou différents et représentent des restes hydrocarbonés monovalents éventuellement substitués de 1 à 13 atomes de carbone,
les Z peuvent être identiques ou différents et représentent des groupes formateurs de radicaux sous l'effet d'un rayonnement,
d est 0 ou 1,
e est 0 ou 1,
g est 1 ou 2,
sous réserve que, dans la formule (V), la somme de d, e et g soit inférieure ou égale à 2.

2. Compositions d'organo(poly)siloxanes selon la revendication 1, caractérisées en ce qu'elles contiennent des unités de formule générale
RₖSiO_{(4-k)/2} (VI),
dans laquelle les R peuvent être identiques ou différents et représentent des restes hydrocarbonés monovalents éventuellement substitués de 1 à 13 atomes de carbone, et
k est 0, 1, 2 ou 3.

3. Organo(poly)siloxanes, qui contiennent
(A) des unités de formule
(R¹O)ₐSiHR²₂₋ₐO_{1/2} (I),
dans laquelle
les R¹ et R² peuvent être, indépendamment les uns des autres, identiques ou différents, et représentent des restes hydrocarbonés monovalents éventuellement substitués de 1 à 13 atomes de carbone, et
a est 1 ou 2, et
(B) des unités siloxane réticulables par exposition à un rayonnement, de formule
GₕSiR³_{b}O_{(4-b-h)/2} (II)
et/ou
R⁵_{c}SiR⁴ᵢO_{(4-c-i)/2} (III),
dans lesquelles
les G peuvent être identiques ou différents et représentent des restes thioalkyle linéaires ou cycliques de 1 à 13 atomes de carbone,
les R³ peuvent être identiques ou différents et représentent des restes hydrocarbonés monovalents éventuellement substitués de 1 à 13 atomes de carbone,
b est 0, 1 ou 2,
h est 1, 2 ou 3,
R⁴ représente un reste monovalent de 2 à 18 atomes de carbone contenant au moins une liaison multiple carbone-carbone aliphatique,
les R⁵ peuvent être identiques ou différents et représentent des restes hydrocarbonés monovalents éventuellement substitués de 1 à 13 atomes de carbone,
c est 0, 1 ou 2, et
i est 1, 2 ou 3,
sous réserve que la somme b+h et la somme c+i soient toujours inférieures ou égales à 3.

4. Organo(poly)siloxanes, qui contiennent
(A) des unités de formule
(R¹O)ₐSiHR²₂₋ₐO_{1/2} (I),
dans laquelle
les R¹ et R² peuvent être, indépendamment les uns des autres, identiques ou différents, et représentent des restes hydrocarbonés monovalents éventuellement substitués de 1 à 13 atomes de carbone, et
a est 1 ou 2,
(B) des unités siloxane réticulables par exposition à un rayonnement, de formule
GₕSiR³_{b}O_{(4-b-h)/2} (II)
et/ou
R⁵_{c}SiR⁴ᵢO_{(4-c-i)/2} (III),
dans lesquelles
les G peuvent être identiques ou différents et représentent des restes thioalkyle linéaires ou cycliques de 1 à 13 atomes de carbone,
les R³ peuvent être identiques ou différents et représentent des restes hydrocarbonés monovalents éventuellement substitués de 1 à 13 atomes de carbone,
b est 0, 1 ou 2,
h est 1, 2 ou 3,
R⁴ représente un reste monovalent de 2 à 18 atomes de carbone contenant au moins une liaison multiple carbone-carbone aliphatique,
les R⁵ peuvent être identiques ou différents et représentent des restes hydrocarbonés monovalents éventuellement substitués de 1 à 13 atomes de carbone,
c est 0, 1 ou 2, et
i est 1, 2 ou 3,
sous réserve que la somme b+h et la somme c+i soient toujours inférieures ou égales à 3,
et
(C) des unités siloxane ayant une activité de photoamorceurs de formule
(R⁷O)_{d}R⁸ₑHZ_{g}SiO_{(3-d-e-g)/2} (V)
dans laquelle
les R⁷ peuvent être identiques ou différents et représentent des restes hydrocarbonés monovalents éventuellement substitués de 1 à 13 atomes de carbone,
les R⁸ peuvent être identiques ou différents et représentent des restes hydrocarbonés monovalents éventuellement substitués de 1 à 13 atomes de carbone,
les Z peuvent être identiques ou différents et représentent des groupes formateurs de radicaux sous l'effet d'un rayonnement,
d est 0 ou 1,
e est 0 ou 1,
g est 1 ou 2,
sous réserve que, dans la formule (V), la somme de d, e et g soit inférieure ou égale à 2.

5. Organo(poly)siloxanes, qui contiennent
(A) des unités de formule
(R¹O)ₐSiHR²₂₋ₐO_{1/2} (I),
dans laquelle
les R¹ et R² peuvent être, indépendamment les uns des autres, identiques ou différents, et représentent des restes hydrocarbonés monovalents éventuellement substitués de 1 à 13 atomes de carbone, et
a est 1 ou 2, et
(C) des unités siloxane ayant une activité de photoamorceurs de formule
(R⁷O)_{d}R⁸ₑHZ_{g}SiO_{(3-d-e-g)/2} (V)
dans laquelle
les R⁷ peuvent être identiques ou différents et représentent des restes hydrocarbonés monovalents éventuellement substitués de 1 à 13 atomes de carbone,
les R⁸ peuvent être identiques ou différents et représentent des restes hydrocarbonés monovalents éventuellement substitués de 1 à 13 atomes de carbone,
les Z peuvent être identiques ou différents et représentent des groupes formateurs de radicaux sous l'effet d'un rayonnement,
d est 0 ou 1,
e est 0 ou 1,
g est 1 ou 2,
sous réserve que, dans la formule (V), la somme de d, e et g soit inférieure ou égale à 2.

6. Organo(poly)siloxanes, qui contiennent au moins une unité de formule
(R⁷O)_{d}R⁸ₑHZ_{g}SiO_{(3-d-e-g)/2} (V)
dans laquelle
les R⁷ peuvent être identiques ou différents et représentent des restes hydrocarbonés monovalents éventuellement substitués de 1 à 13 atomes de carbone,
les R⁸ peuvent être identiques ou différents et représentent des restes hydrocarbonés monovalents éventuellement substitués de 1 à 13 atomes de carbone,
les Z peuvent être identiques ou différents et représentent des groupes formateurs de radicaux sous l'effet d'un rayonnement,
d est 0 ou 1,
e est 0 ou 1,
g est 1 ou 2,
sous réserve que, dans la formule (V), la somme de d, e et g soit inférieure ou égale à 2.

7. Utilisation des compositions d'organo(poly)siloxanes selon la revendication 1 pour la préparation de revêtements.
